# EUROPEAN PATENT APPLICATION

(11) **EP 4 611 407 A1**
(43) Date of publication of application: **03.09.2025**
(21) Application number: 23884263.7
(22) Date of filing: 30.06.2023
(51) Int. Cl.: H04W 4/40, G08G 1/0967, H04W 4/12, H04W 4/44, H04L 69/24

(54) **INFORMATION INDICATION METHOD, INFORMATION USE METHOD, RELATED APPARATUS, AND SYSTEM**

(30) Priority: 31.10.2022 CN 202211366086
(71) Applicant: Shenzhen Yinwang Intelligent Technologies Co., Ltd., Shenzhen, Guangdong 518129 (CN)
(72) Inventor: ZHAO, Xun, Shenzhen, Guangdong 518129 (CN); YANG, Miao, Shenzhen, Guangdong 518129 (CN); LI, Mingchao, Shenzhen, Guangdong 518129 (CN)
(74) Representative: Maiwald GmbH
(86) International application number: PCT/CN2023/105101
(87) International publication number: WO 2024/093324

(57) **Abstract**

An information indication method, an information use method, and a related apparatus and system are provided, and may be applied to a cooperative intelligent transportation system and the like. The method includes: A first device generates and sends a first message, where capability information in the first message indicates a message type set, and the message type set includes one or more message types supported by the first device; and a second device that receives the first message sends a second message to the first device based on the capability information, where the second message belongs to the message type set supported by the first device. Because the first device is capable of supporting a message type of the second message, the first device can respond to the second message sent by the second device. Therefore, a problem that a capability of a cooperative initiator does not match a capability of a cooperative receiver can be resolved, unnecessary resource consumption caused by sending an invalid request by the cooperative initiator is avoided, and interaction efficiency of cooperation between devices and passing efficiency and safety can be improved.

## Description

This application claims priority to Chinese Patent Application No. 202211366086.0, filed with the China National Intellectual Property Administration on October 31, 2022 and entitled "INFORMATION INDICATION METHOD, INFORMATION USE METHOD, AND RELATED APPARATUS AND SYSTEM", which is incorporated herein by reference in its entirety.

### TECHNICAL FIELD

This application relates to the field of smart transportation, and in particular, to an information indication method, an information use method, and a related apparatus and system.

### BACKGROUND

Currently, travel services of autonomous driving and vehicle-road cooperation are in a development stage. A plurality of cooperation scenarios between vehicles and between vehicles and other devices have been proposed, for example, a cooperative lane change, cooperative vehicle merge, cooperative intersection communication, and cooperative high priority vehicle passing. If a vehicle enters a cooperation scenario in a traveling process, the vehicle may request cooperation of other devices by sending cooperation request messages.

However, in some cases, these messages cannot be responded to, which leads to a waste of a large quantity of resources. For example, processing resources used to generate the messages are wasted, and channel resources used to transmit the messages are wasted. As a result, resource utilization is low.

### SUMMARY

This application provides an information indication method, an information use method, and a related apparatus and system, to avoid an unnecessary resource waste and improve resource utilization.

According to a first aspect, this application provides an information indication method, and the method may be applied to a first device. The first device may be a vehicle-end device, a road side device, or a terminal device, or may be a component configured in a vehicle, a road side device, or a terminal device, for example, a chip, a chip system, a processor, or a logical module or software that can implement all or some functions of an information indication apparatus.

The vehicle-end device may include, for example, a vehicle, an on board unit (on board unit, OBU), and the like. The road side device may include, for example, a road side unit (road side unit, RSU), a road side sensing device (for example, a lidar (lidar), a camera (camera), and a millimeter-wave radar (radar)). The terminal device may include, for example, a portable mobile device (for example, a mobile phone or a tablet), an intelligent wearable device (for example, a sports band or a watch).

For example, the method includes: generating a first message, where the first message includes capability information, the capability information indicates a message type set, and the message type set includes one or more message types supported by the first device; and sending the first message.

The message type set may include one message type, or may include a plurality of message types. This is related to a quantity of message types supported by the first device.

That the first device supports a message type may be understood as that the first device, as a message receiver, can receive, parse, and process a message of the message type; and/or the first device, as a message sender, can generate and send a message of the message type.

Based on the foregoing solution, the second device may determine, based on the received capability information of the first device, the message type set supported by the first device. Therefore, when there is a cooperation intention, the second device may determine, based on the capability information of the first device, whether a capability of the first device matches the cooperation intention, and may send, to the first device when the capability of the first device matches the cooperation intention, a message used to indicate the cooperation intention of the second device, or does not send the message to the first device when the capability of the first device does not match the cooperation intention. In this way, when there is a cooperation intention, the second device does not blindly generate and send, to another device, a message that does not match a capability of the another device. This can avoid a resource waste caused because a message sent by the second device is not responded to. By analogy, each device may notify capability information of the device to another device, to facilitate cooperation between devices. In this way, efficiency of interaction between the devices can also be improved, and passing efficiency and safety can be improved.

For example, the message type supported by the first device includes one or more of the following: a basic safety message (basic safety message, BSM), a parking area map (parking area map, PAM), a connectionless platooning management message (connectionless platooning management message, CLPMM), a personal safety message (personal safety message, PSM), a radio technical commission for maritime service (radio technical commission for maritime service, RTCM), a road side coordination (road side coordination, RSC) message, a road side message (road side message, RSM), a sensor sharing message (sensor sharing message, SSM), a vehicle intention and request (vehicle intention and request, VIR), or a vehicle payment message (vehicle payment message, VPM).

It should be noted that different message types may be used in different application scenarios. Therefore, when the first device supports an application scenario, the first device may support a message type used in the application scenario. In other words, there is a correspondence between a message type and an application scenario. Each application scenario may correspond to one or more message types, and one message type may be used in one or more application scenarios. A message type corresponding to each application scenario is a message type used in the application scenario.

Therefore, the message type set supported by the first device may be represented by the one or more message types supported by the first device, or may be represented by one or more application scenarios supported by the first device.

For example, the application scenario supported by the first device includes one or more of the following: sensor data sharing (sensor data sharing, SDS), a cooperative lane change (cooperative lane change, CLC), cooperative vehicle merge (cooperative vehicle merge, CVM), cooperative intersection passing (cooperative intersection passing, CIP), differential data service (differential data service, DDS), dynamic lane management (dynamic lane management, DLM), cooperative high priority vehicle passing (cooperative high priority vehicle passing, CHPVP), a guidance service in parking area (guidance service in parking area, GSPA), probe data collection (probe data collection, PDC), vulnerable road user safe passing (vulnerable road user safe passing, VRSUP), cooperative platooning management (cooperative platooning management, CPM), or a road tolling service (road tolling service, RTS).

With reference to the first aspect, in some possible implementations of the first aspect, the sending the first message includes: sending the first message in a broadcast manner.

The first device sends the first message in the broadcast manner, so that more devices receive the first message, so as to improve efficiency of interaction between devices.

With reference to the first aspect, in some possible implementations of the first aspect, the first message is a periodically sent message.

Due to high mobility of a vehicle, the first message sent by the first device may be received by different devices at different time. The first message is periodically sent, so that the first device notifies, in a timely manner, the capability information of the first device to another device around the first device. This helps improve efficiency of interaction between devices.

With reference to the first aspect, in some possible implementations of the first aspect, the first message is sent in response to triggering of a preset event.

The preset event may be predefined in a protocol. For example, the preset event may include but is not limited to: first access to a network, an application scenario in a predefined application scenario, a cooperation intention, a capability information change (for example, a capability of the first device is limited due to power control or the like), a physical address change (for example, a MAC address change), or a location change of the first device.

The first device sends the first message in response to triggering of the preset event, so that the capability information of the first device can be notified to another surrounding device in a timely manner, and the another device can accurately learn the capability of the first device, so as to improve efficiency of interaction between devices.

The foregoing three possible implementations may be separately used or may be used in combination.

In an example, the first message may be a message that is periodically sent in the broadcast manner.

In another example, the first message may be sent in the broadcast manner in response to triggering of the preset event.

In another example, the first message may be a message that is periodically sent in the broadcast manner and sent again when the preset event is triggered.

According to a second aspect, this application provides an information use method, and the method may be applied to a second device. The second device may be a vehicle, a road side device, or a terminal device, or may be a component configured in a vehicle, a road side device, or a terminal device, for example, a chip, a chip system, a processor, or a logical module or software that can implement all or some functions of an information use apparatus.

For example, the method includes: receiving a first message from a first device, where the first message includes capability information, the capability information indicates a message type set, and the message type set includes one or more message types supported by the first device; and sending a second message to the first device based on the capability information, where a message type of the second message belongs to the message type set.

The message type set supported by the first device may include a message type supported by the first device, and the first device may support one or more message types. Therefore, the message type set supported by the first device may include the one or more message types.

That the first device supports a message type may be understood as that the first device, as a message receiver, can receive, parse, and process a message of the message type; and/or the first device, as a message sender, can generate and send a message of the message type.

Based on the foregoing solution, the second device may determine, based on the received capability information of the first device, the message type set supported by the first device. Therefore, when there is a cooperation intention, the second device may determine, based on the capability information of the first device, whether a capability of the first device matches the cooperation intention, that is, determine whether the second message is a message supported by the first device, and may send the second message to the first device when the first device supports the second message. On the contrary, if the first device does not support the second message, the second device may not send the second message to the first device. In this way, when there is a cooperation intention, the second device does not blindly generate and send the message to another device. This can avoid a resource waste caused because the second message sent by the second device is not responded to. By analogy, each device may notify capability information of the device to another device, to facilitate cooperation between devices. In this way, efficiency of interaction between the devices can also be improved, and passing efficiency and safety can be improved.

It should be noted that different message types may be used in different application scenarios. Therefore, when the first device supports an application scenario, the first device may support a message type used in the application scenario. In other words, there is a correspondence between a message type and an application scenario. Each application scenario may correspond to one or more message types, and one message type may be used in one or more application scenarios. A message type corresponding to each application scenario is a message type used in the application scenario.

Therefore, the message type set supported by the first device may be represented by the one or more message types supported by the first device, or may be represented by one or more application scenarios supported by the first device.

The first aspect provides examples of the message type and the application scenario supported by the first device. For brevity, details are not described herein again.

With reference to the second aspect, in some possible implementations of the second aspect, the sending a first message to the first device based on the capability information includes: determining, based on the capability information, that the first device is capable of supporting a message of a first type, where the first type is a message type used in a first application scenario; and sending the second message to the first device in the first application scenario, where the message type of the second message is the first type.

Because the first application scenario corresponds to the first type, and the message type of the second message is the first type, the second message belongs to the message type used in the first application scenario. A possible manner in which the second device determines whether to send the second message to the first device is as follows: The second device may determine, based on a current application scenario, a message type that needs to be used, and then determine, based on the capability information of the first device, whether the first device supports the second message. If the first device supports the second message, the second message may be sent to the first device; or if the first device does not support the second message, the second message may not be sent to the first device. This can avoid a resource waste caused because the second message sent by the second device is not responded to.

As an example rather than a limitation, the following provides several examples of the first application scenario, the second message, and the message type thereof.

In an example, the first application scenario includes sensor data sharing (sensor data sharing, SDS), the message type of the second message includes a sensor sharing message (sensor sharing message, SSM) type, and the second message is used to request the sensor data sharing.

In another example, the first application scenario includes a cooperative lane change, a message type of the second message includes a vehicle intention and request (vehicle intention and request, VIR) type, and the second message is used to request the cooperative lane change.

In another example, the first application scenario includes cooperative high priority vehicle passing (cooperative high priority vehicle passing, CHPVP), the second device is a high-priority vehicle, the message type of the second message includes a VIR type and a road side coordination (road side coordination, RSC) message type, and the second message is used to request to preferentially pass a traveling route that is planned for the second device in advance.

With reference to the second aspect, in some possible implementations of the second aspect, the method further includes: storing the capability information in a cooperation capability table.

The second device may locally store capability information obtained through parsing, for example, locally maintain the cooperation capability table, to maintain capability information from the first device and another device. Therefore, when there is a cooperation intention, the second device determines a device whose capability matches the cooperation intention from the cooperation capability table, to send a message indicating the cooperation intention of the second device, for example, the second message. This can avoid a problem that a message sent to a device whose capability does not match the cooperation intention is not responded to, avoid a resource waste, and facilitate cooperation between devices.

It should be understood that, the locally maintained cooperation capability table of the second device is not limited to storing the capability information, and one or more of identifier information, a physical address, and location information may also be stored in the cooperation capability table.

With reference to the second aspect, in some possible implementations of the second aspect, the first message is a message sent in a broadcast manner.

Because a broadcast message can be received by a device in a signal coverage area of the broadcast message, each device that can receive the first message may make an appropriate decision based on information in the first message. This helps improve efficiency of interaction between devices.

With reference to the second aspect, in some possible implementations of the second aspect, the first message is a periodically sent message.

Due to high mobility of a vehicle, the first message sent by the first device may be received by different devices at different time. The first message is periodically sent, so that the second device receives capability information of a device around the second device in a timely manner. This helps improve efficiency of interaction between devices.

With reference to the second aspect, in some possible implementations of the second aspect, the first message is sent in response to triggering of a preset event.

The preset event may be predefined in a protocol. For example, the preset event may include but is not limited to: first access to a network, an application scenario in a predefined application scenario, a cooperation intention, a capability information change (for example, a capability of the first device is limited due to power control or the like), a physical address change (for example, a MAC address change), or a location change of the first device.

The first message is sent in response to triggering of the preset event, so that the capability information of the first device can be notified to another surrounding device in a timely manner, and the second device can accurately learn the capability of the first device, so as to improve efficiency of interaction between devices.

Further, the method further includes: updating the cooperation capability table when at least one of the following conditions is met:
duration from time at which the first message is most recently received reaches a first preset threshold;
the capability information in the first message is inconsistent with capability information locally stored in the second device; or
a distance between the first device and the second device is greater than a second preset threshold.

The cooperation capability table is updated because a location, a physical address, capability information, and the like of each device may change as time progresses. Updating the cooperation capability table can keep freshness and accuracy of information in the cooperation capability table maintained in the second device, so that the second device correctly selects a device whose capability matches the cooperation intention. Therefore, a problem that a message sent to a device whose capability does not match the cooperation intention cannot be responded to can be avoided, a resource waste can be avoided, and cooperation between devices can be facilitated.

The following shows several possible examples of the capability information.

With reference to the first aspect or the second aspect, in some possible implementations, that the capability information indicates a message type set includes: The capability information includes information indicating the one or more message types.

With reference to the first aspect or the second aspect, in some possible implementations, the one or more message types are message types used in one or more application scenarios, and that the capability information indicates a message type set includes: The capability information includes information indicating the one or more application scenarios.

With reference to the first aspect or the second aspect, in some possible implementations, that the capability information indicates a message type set includes: The capability information includes information indicating the one or more message types and information indicating the one or more application scenarios.

The information indicating the message type supported by the first device and the information indicating the application scenario supported by the first device may be carried in different fields of the first message, so that the message type supported by the first device and the application scenario supported by the first device are separately indicated by codes in the different fields.

As an example rather than a limitation, the following provides several possible application scenarios and corresponding message types.

In an example, an application scenario includes the sensor data sharing, and a corresponding message type includes the SSM type.

In another example, an application scenario includes the cooperative lane change, and a corresponding message type includes the VIR type.

In another example, an application scenario includes the cooperative vehicle merge, and a corresponding message type includes the RSC type and the VIR type.

In another example, an application scenario includes the cooperative intersection passing, and a corresponding message type includes the RSC type.

In another example, an application scenario includes the differential data service, and a corresponding message type includes the RTCM type.

In another example, an application scenario includes the dynamic lane management, and a corresponding message type includes the RSC type.

In another example, an application scenario includes the cooperative high priority vehicle passing, and a corresponding message type includes the VIR type and the RSC type.

In another example, an application scenario includes the guidance service in parking area, and a corresponding message type includes the VIR type and the RSC type.

In another example, an application scenario includes the probe data collection, and a corresponding message type includes the BSM type, the VIR type, and the SSM type.

In another example, an application scenario includes the vulnerable road user safe passing, and a corresponding message type includes the PSM type.

In another example, an application scenario includes the cooperative platooning management, and a corresponding message type includes the CLPMM type.

In another example, an application scenario includes the road tolling service, and a corresponding message type includes the VPM type.

With reference to the first aspect or the second aspect, in some possible implementations, the first message is an application-layer message.

Because an application layer of the first device may determine the capability of the first device, that is, may determine the message type set supported by the first device, the application layer of the first device may directly generate the first message, and then transmit the first message to an access layer through a network layer for sending. That the application layer of the first device generates the first message may be understood as that the first message is an application-layer message and has a structure of an application-layer message. Therefore, after the first message is received by another device (for example, the second device), the information in the first message may also be obtained through parsing at the application layer.

In a possible design, the first message is a basic safety message (basic safety message, BSM), a road side message (road side message, RSM), or a personal safety message (personal safety message, PSM), and the capability information is carried in a field indicating the message type supported by the first device and/or a field indicating the application scenario supported by the first device in the first message.

It should be understood that the BSM is a type of message that can be sent by the vehicle-end device, the RSM is a type of message that can be sent by the road side device, and the PSM is a type of message that can be sent by the terminal device. For example, the field indicating the message type supported by the first device in the first message may be a supported message type field, and the field indicating the application scenario supported by the first device in the first message is a supported application scenario field.

Because the first message is used to carry the capability information of the first device, and the capability information is information that is expected to be interpreted by a device that receives the first message, if more devices can interpret the capability information, it is more conducive to improving efficiency of interaction between devices. Therefore, the message type of the first message used to carry the capability information needs to be supported by various types of devices. In other words, the BSM can be received and parsed by the road side device and the terminal device, the RSM can be received and parsed by the vehicle-end device and the terminal device, and the PSM can be received and parsed by the vehicle-end device and the road side device. Certainly, in the application-layer message, the first message used to carry the capability information is not limited to the BSM, the RSM, and the PSM, and another message type that can be supported by various type of devices may alternatively be used to carry the capability information.

With reference to the first aspect or the second aspect, in some possible implementations, the first message is a network-layer message.

The first message is not limited to being generated at the application layer of the first device. The application layer may transmit, to the network layer of the first device by using a cross-layer primitive, information used to represent the capability of the first device, and the network layer may alternatively generate the first message. Corresponding to the application-layer message, a message generated at the network layer may be referred to as a network-layer message. That the network layer of the first device generates the first message may be understood as that the first message is a network-layer message and has a structure of a network-layer message.

In a possible design, the first message is a dedicated service advertisement (dedicated service advertisement, DSA), and the capability information is carried in a DSA header extension (DSA Header Extension) field or a DSA application extension (DSA Application Extension) field of the first message.

It should be understood that, as an example of the first message, the DSA belongs to a message type that can be supported by various types of devices. In the network-layer message, the first message used to carry the capability information is not limited to the DSA, and another message type that can be supported by various type of devices may alternatively be used to carry the capability information.

The DSA header extension field and the DSA application extension field are examples of fields used to carry the capability information in the first message, and should not constitute any limitation on this application.

With reference to the first aspect or the second aspect, in some possible implementations, the first message further includes identifier information and/or a physical address of the first device.

Optionally, the identifier information includes an identifier of a device type of the first device and a device identifier of the first device, and the device identifier uniquely identifies the first device in one or more devices corresponding to the device type.

Optionally, the physical address includes a media access control (media access control, MAC) address.

Both the identifier information and the physical address may correspond to the device. Therefore, either the identifier information or the physical address may be used to identify the device. Therefore, both can be considered as device identity information. In this application, identity information of the first device is indicated, so that the second device maps different devices to different capability information. In addition, the physical address of the first device is indicated, so that the second device can quickly find the physical address of the first device when the second device needs to send the second message to the first device.

Certainly, the identifier information and the physical address may not be carried in the first message. The first device may alternatively carry the identifier information and the physical address of the first device in another message, for example, another existing message.

With reference to the first aspect or the second aspect, in some possible implementations, the first message further includes location information, and the location information indicates a location of the first device.

The location of the first device is indicated, so that when there is a cooperation intention, the second device determines, with reference to the location of the first device, whether the first device is suitable for being used as a cooperation device. For example, although the capability of the first device can match the cooperation intention, the first device may be far away from the second device, and may not be suitable for being used as a cooperation device in some application scenarios (for example, the cooperative lane change and the cooperative vehicle merge). Therefore, the second message does not need to be sent to the first device, to avoid a resource waste.

Certainly, the location information may not be carried in the first message. The first device may alternatively carry the location information of the first device in another message, for example, another existing message.

According to a third aspect, this application provides an information indication apparatus, including modules or units configured to implement the method according to the first aspect or any possible implementation of the first aspect. It should be understood that the modules or units may implement corresponding functions by executing a computer program.

According to a fourth aspect, this application provides an information indication apparatus, including a processor, where the processor is coupled to a memory, the memory is configured to store a computer program, and the processor executes the computer program, so that the apparatus implements the information indication method according to the first aspect or any possible implementation of the first aspect.

Optionally, the apparatus may further include a communication interface. The communication interface is used by the apparatus to communicate with another device. For example, the communication interface may be a transceiver, a circuit, a bus, a module, or another type of communication interface.

Optionally, the information indication apparatus in the third aspect and the fourth aspect is the first device in the first aspect.

According to a fifth aspect, this application provides an information use apparatus, including modules or units configured to implement the method according to the second aspect or any possible implementation of the second aspect. It should be understood that the modules or units may implement corresponding functions by executing a computer program.

According to a sixth aspect, this application provides an information use apparatus, including a processor, where the processor is coupled to a memory, the memory is configured to store a computer program, and the processor executes the computer program, so that the apparatus implements the information use method according to the second aspect or any possible implementation of the second aspect.

Optionally, the apparatus may further include a communication interface. The communication interface is used by the apparatus to communicate with another device. For example, the communication interface may be a transceiver, a circuit, a bus, a module, or another type of communication interface.

Optionally, the information use apparatuses in the fifth aspect and the sixth aspect are the second device in the second aspect.

It should be understood that the apparatus in the third aspect and the sixth aspect may be a vehicle-end device, a road side device, a terminal device, or a component (for example, a chip or a chip system) configured in a vehicle-end device, a road side device, or a terminal device. This is not limited in this application.

According to a seventh aspect, this application provides a vehicle. The vehicle may be configured to support implementation of functions in the first aspect and the second aspect and any possible implementation of the first aspect and the second aspect, for example, receiving or processing data and/or information in the foregoing methods.

According to an eighth aspect, this application provides a road side device. The road side device may be configured to support implementation of functions in the first aspect and the second aspect and any possible implementation of the first aspect and the second aspect, for example, receiving or processing data and/or information in the foregoing methods.

According to a ninth aspect, this application provides a terminal device. The terminal device may be configured to support implementation of functions in the first aspect and the second aspect and any possible implementation of the first aspect and the second aspect, for example, receiving or processing data and/or information in the foregoing methods.

According to a tenth aspect, this application provides a chip system. The chip system includes at least one processor, configured to support implementation of functions in the first aspect and the second aspect and any possible implementation of the first aspect and the second aspect, for example, receiving or processing data and/or information in the foregoing methods.

In a possible design, the chip system further includes a memory, the memory is configured to store program instructions and data, and the memory is located inside or outside the processor.

The chip system may include a chip, or may include a chip and another discrete component.

According to an eleventh aspect, this application provides a communication system, including the foregoing information indication apparatus and the foregoing information use apparatus. The information indication apparatus is configured to perform the method in the first aspect or any possible implementation of the first aspect, and the information use apparatus is configured to perform the method in the second aspect or any possible implementation of the second aspect.

According to a twelfth aspect, this application provides a computer-readable storage medium, including a computer program. When the computer program is run on a computer, the computer is enabled to implement the method according to the first aspect, the second aspect, and any possible implementation of the first aspect and the second aspect.

According to a thirteenth aspect, this application provides a computer program product, where the computer program product includes a computer program (which may also be referred to as code or instructions), and when the computer program is run, the computer is enabled to perform the method according to the first aspect, the second aspect, and any possible implementation of the first aspect and the send aspect.

### BRIEF DESCRIPTION OF DRAWINGS

FIG. 1 is a diagram of an architecture of a system according to an embodiment of this application;
FIG. 2 is a diagram of a protocol stack architecture used for communication between devices according to an embodiment of this application;
FIG. 3 is a schematic flowchart of an information indication method and an information use method according to an embodiment of this application;
FIG. 4 is a diagram of capability information of a first device according to an embodiment of this application;
FIG. 5 is a diagram of identity information of a first device according to an embodiment of this application;
FIG. 6 is a diagram of identity information and capability information of a first device according to an embodiment of this application;
FIG. 7 and FIG. 8 are diagrams of a first message according to an embodiment of this application;
FIG. 9 to FIG. 11 are diagrams of a first application scenario according to an embodiment of this application; and
FIG. 12 to FIG. 14 are block diagrams of apparatuses according to an embodiment of this application.

### DESCRIPTION OF EMBODIMENTS

The following describes technical solutions of this application with reference to accompanying drawings.

For ease of understanding embodiments of this application, the following descriptions are provided first.

First, "sending" in embodiments of this application may be performed between devices, for example, may be performed between different vehicles, or may be performed between different road side devices, or may be performed between different types of devices, for example, between a vehicle and a terminal device, or between a vehicle and a road side device. For another example, "sending" may be performed in a device, for example, between components, modules, chips, software modules, or hardware modules in the device through a bus, a cable, or an interface. For example, sending of indication information may be performed in a same vehicle, or may be performed in a same road side device.

"Receiving" in embodiments of this application may be performed between devices, for example, may be performed between different vehicles, or may be performed between different road side devices, or may be performed between different types of devices, for example, between a vehicle and a terminal device, or between a vehicle and a road side device. For another example, "receiving" may be performed in a device, for example, between components, modules, chips, software modules, or hardware modules in the device through a bus, a cable, or an interface. For example, receiving of indication information may be performed in a same vehicle.

Second, prefixes such as "first" and "second" in embodiments of this application are merely intended to distinguish between different objects, and impose no limitation on locations, sequences, priorities, quantities, content, or the like of the described objects. For example, if a described object is a "field", ordinal numbers before "fields" in a "first field" and a "second field" do not limit locations or a sequence of the "fields", and "first" and "second" do not limit whether the "fields" decorated by the "first" and the "second" are in a same message, and do not limit a sequence of the "first field" and the "second field". For another example, a quantity of described objects is not limited by prefixes, and may be one or more. A "first device" is used as an example, where a quantity of "devices" may be one or more. In addition, objects decorated by different prefixes may be the same or different. For example, if a described object is a "device", a "first device" and a "second device" may be a same device, devices of a same type, or devices of different types. In conclusion, use of the prefixes used to distinguish between the described objects in embodiments of this application does not constitute a limitation on the described objects. For descriptions of the described objects, refer to the context descriptions in the claims or embodiments, and use of the prefixes should not constitute a redundant limitation.

Third, in embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

Fourth, in embodiments of this application, both "when" and "if" mean that an apparatus performs corresponding processing in an objective situation, are not intended to limit time, do not require the apparatus to necessarily have a determining action during implementation, and do not mean another limitation.

Fifth, "simultaneously" in embodiments of this application may be understood as being at a same time point, may be understood as being in a time period, or may be understood as being in a same period, and may be specifically understood with reference to the context.

The technical solutions provided in this application may be applied to an intelligent transportation system, which is also referred to as an intelligent transportation system (intelligent transportation system). The intelligent transportation system effectively applies an information technology, a data communication technology, a sensor technology, artificial intelligence, and the like to transportation and service control. This can effectively improve safety and efficiency of transportation.

A cooperative intelligent transportation system (cooperative intelligent transportation system, C-ITS) is an intelligent transportation system that implements intelligent cooperation and coordination between vehicles and infrastructure, between vehicles, and between vehicles and persons through information interaction between persons, vehicles, and roads.

Currently, travel services of autonomous driving and vehicle-road cooperation are in a development stage. A vehicle to everything (vehicle to X, V2X, where X represents everything) technology is an indispensable interconnection technology for a driving assistance system and an autonomous driving system. V2X interconnects a vehicle to the outside to form a vehicle-to-vehicle (vehicle-to-vehicle, V2V) communication network, a vehicle-to-infrastructure (vehicle-to-infrastructure, V2I) communication network, a vehicle-to-pedestrian (vehicle-to-pedestrian, V2P) communication network, a vehicle-to-network (vehicle-to-network, V2N) communication network, and the like, and the vehicle performs information transmission, analysis, and cooperation with another surrounding vehicle, person, or object by using a sensor or a network communication technology.

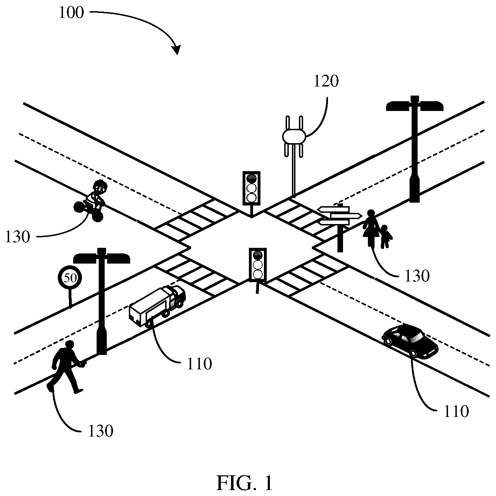

FIG. 1 is a diagram of an architecture of a system applicable to an embodiment of this application. A system 100 shown in FIG. 1 includes at least one of a vehicle-end device 110, a road side device 120, or a terminal device 130. For example, FIG. 1 shows the vehicle-end device 110, the road side device 120, and the terminal device 130.

The vehicle-end device 110 may include but is not limited to a vehicle, an on board unit (on board unit, OBU), and the like. Vehicles shown in the figure are two examples of the vehicle-end device. The road side device 120 may include apparatuses such as a road side unit (road side unit, RSU) and a road side sensing device (for example, a lidar, a camera, or a millimeter-wave radar). RSUs shown in the figure are two examples of the road side device. The terminal device 130 may include but is not limited to a portable mobile device (for example, a mobile phone or a tablet), an intelligent wearable device (for example, a sports band or a watch), and the like. A pedestrian and a rider shown in the figure may separately carry devices such as a mobile phone and a watch, and these devices are several examples of the terminal device. Pedestrians, riders (for example, including riders riding a bicycle, an electric bicycle, a motorcycle, and a tricycle), and workers who perform construction on roads may be collectively referred to as vulnerable road users (vulnerable road users, VRUs). In brief, the vehicle-end device 110, the road side device 120, and the terminal device 130 shown in FIG. 1 may be simplified into a vehicle, a road, and a person.

Either of the vehicle-end device 110 and the road side device 120 may be configured with a sensing device like a radar or a camera, to sense an ambient environment. A positioning system may be installed on any one of the vehicle-end device 110, the road side device 120, and the terminal device 130, to obtain a location of the corresponding device.

It should be understood that the figure is merely an example, and specific forms and a quantity of vehicle-end devices 110, road side devices 120, or terminal devices 130 are not limited in this application.

It should be further understood that any one of the vehicle-end device 110, the road side device 120, and the terminal device 130 may be used as a sending device, or may be used as a receiving device. In other words, the vehicle-end device 110, the road side device 120, and the terminal device 130 may communicate with each other. In other words, the vehicle, the road, and the person can communicate with each other.

Communication between devices may implement information interaction by using a V2X technology. For example, the devices may communicate with each other through a cellular communication network, or may communicate with each other through a direct communication network. This is not limited in this application.

Cellular communication may include but is not limited to: 2nd generation (2nd generation, 2G) cellular communication, for example, a global system for mobile communications (global system for mobile communications, GSM) and a general packet radio service (general packet radio service, GPRS); 3rd generation (3rd generation, 3G) cellular communication, for example, wideband code division multiple access (wideband code division multiple access, WCDMA), time division-synchronous code division multiple access (time division-synchronous code division multiple access, TS-SCDMA), and code division multiple access (code division multiple access, CDMA); 4th generation (4th generation, 4G) cellular communication, for example, long term evolution (long term evolution, LTE); 5G cellular communication, and other evolved cellular communication; 5th generation (5th generation, 5G) cellular communication, for example, new radio (new radio, NR); or other cellular communication. Corresponding to the cellular communication, a cellular communication interface, for example, a user to network interface universal (user to network interface universal, Uu) interface, may be configured for each device that can implement communication through the cellular communication. Therefore, the cellular communication interface may also be referred to as a Uu interface for short. It should be understood that the Uu interface is a communication interface between a device and a base station, and can implement reliable communication in a long distance and a larger range. The device herein may include any one of the vehicle-end device, the road side device, or the terminal device on which the Uu interface is configured.

Direct communication may be direct communication performed by using a device-to-device (device-to-device, D2D) technology. For example, when there is no wireless network coverage, communication between devices may be implemented through the direct communication. Corresponding to the direct communication, a direct communication interface, for example, a PC5 interface, may be configured for each device that can implement communication through the direct communication. Therefore, the direct communication interface may also be referred to as a PC5 interface for short. It should be understood that the PC interface is a communication interface between terminals, and is applicable to short-range direct communication between a vehicle, a person, and a road.

In addition to the cellular communication network and the direct communication network, the devices may alternatively communicate with each other through another communication network, for example, a wireless local area network (wireless local area network, WLAN), an infrared link, Bluetooth (Bluetooth), or ZigBee (ZigBee). This application includes but is not limited thereto.

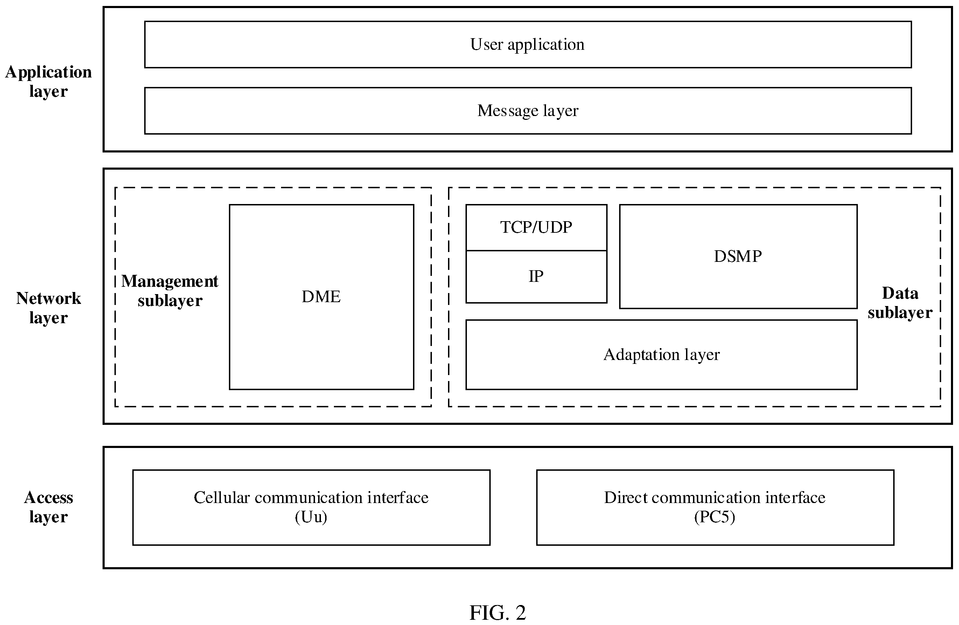

FIG. 2 shows a protocol stack architecture used for communication between devices according to an embodiment of this application. As shown in the figure, the protocol stack may include an access layer, a network layer, and an application layer. The access layer may be used to implement receiving and sending of an air interface message for wireless communication. For example, the access layer may include a Uu interface and a PC interface, to support cellular communication and direct communication. The network layer may include a data sublayer and a management sublayer. The data sublayer may mainly include: an adaptation layer (adaptation layer), a dedicated short message protocol (dedicated short message protocol, DSMP) protocol, a transmission control protocol (transmission control protocol, TCP)/internet protocol (internet protocol, IP), and a user datagram protocol (user datagram protocol, UDP)/IP. The data sublayer may transmit data streams between application layers, data streams between different device management layer entities, or data streams between a management layer entity and an application layer. The DSMP may be used to be responsible for data interaction between the network layer and different applications. For example, a DSMP entity may deliver a data packet of an application layer to the access layer, or may transmit a short message that the application layer is interested in to the application layer. The management sublayer mainly implements functions such as system configuration and maintenance. A dedicated management entity (dedicated management entity, DME) is a general set of management services. The DME may provide a management interface for all data sublayer entities. The application layer may be used to implement functions such as logical operation, autonomous driving joint control, warning broadcasting, and human-machine interaction. The application layer may include a message layer and a user application. The message layer may be used to define a nested structure of a message frame, a message body, a data frame, and a data element, and translate a message into a format that can be adapted by the user application. In other words, the message layer may be used for message encoding and decoding. In addition, the message layer may be further used for data convergence and processing. The user application may include a specific application, for example, an application that may be used to implement a function like "forward collision warning". Examples are not enumerated one by one herein.

It should be understood that FIG. 2 is merely a possible example of the protocol stack architecture used for communication between devices, and should not constitute any limitation on this application. The devices may alternatively communicate with each other based on another protocol stack architecture.

With development of the V2X technology, vehicle-to-vehicle and vehicle-to-other device cooperation scenarios are proposed. For example, vehicles may cooperate with each other to perform a cooperative lane change, cooperative merge, and the like. In an example, a vehicle (for example, denoted as a vehicle A) wants to cooperate with another vehicle to perform a cooperative lane change. The vehicle A may send a cooperation request to another vehicle around the vehicle A. However, in some cases, the cooperation request of the vehicle A cannot be responded to, and the cooperation request of the vehicle A cannot be completed. Researchers found that this is related to a capability of the another vehicle around the vehicle A. For example, the another vehicle around the vehicle A may not necessarily have a capability of parsing the cooperation request. Therefore, the received cooperation request cannot be correctly parsed, and the request cannot be responded to. Alternatively, the another vehicle around the vehicle A may not necessarily have a processing capability for cooperation. Therefore, the cooperation request sent by the vehicle A cannot be responded to, and a resource waste is caused. For example, a processing resource used by the vehicle A to generate the cooperation request is wasted, and a channel resource used by the vehicle A to transmit the cooperation request is wasted.

In view of this, this application provides a method. Each device notifies, by sending capability information of the device, another device of a cooperation capability of the device, so that a device (for example, the vehicle A in the foregoing example) with a cooperation intention selects, from surrounding devices, a device that can adapt to the cooperation intention of the device to send a message. In this way, a probability that the message of the device with the cooperation intention is responded to is increased, resources used to generate and transmit the message are effectively used, and resource utilization is improved. In addition, because the message can be responded to with a higher probability, and the cooperative intention can be accordingly completed with a higher probability, strong technical support is provided for intelligent transportation, so that the vehicle can make a correct driving decision. This helps improve traffic safety and passing efficiency.

With reference to the accompanying drawings, the following describes in detail the method provided in embodiments of this application.

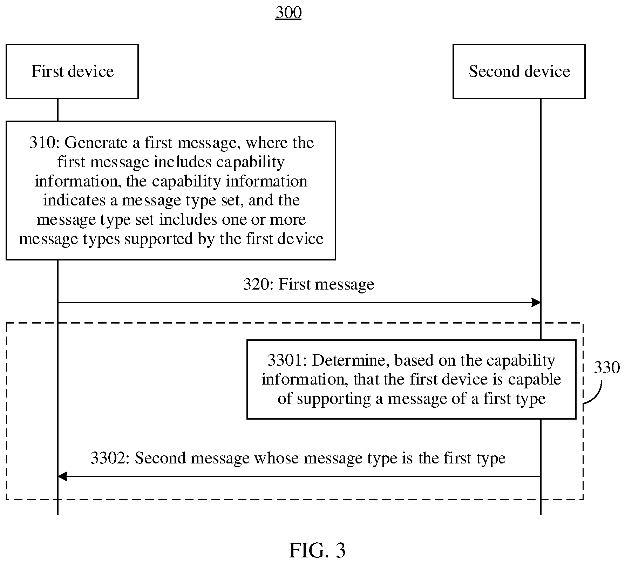

FIG. 3 is a schematic flowchart of an information indication method and an information use method according to an embodiment of this application. FIG. 3 shows the method from a perspective of interaction between a first device and a second device. The first device and the second device each may be a vehicle-end device, a road side device, or a terminal device, or may be a component configured in a vehicle-end device, a road side device, or a terminal device, for example, a chip, a chip system, or a processor. This is not limited in this application.

A method 300 shown in FIG. 3 may include step 310 to step 330. The following describes the steps in the method 300 in detail.

In step 310, the first device generates a first message, where the first message includes capability information, and the capability information indicates a message type set.

The first device may be any one of the vehicle-end device, the road side device, or the terminal device. Without loss of generality, the following uses the first device as an example to describe the first message and information included in the first message in detail.

For the first device, the message type set indicated by the capability information may include one or more message types supported by the first device. It should be understood that the message type set may include one message type, or may include a plurality of message types. This is related to a quantity of message types supported by the first device. The message type set should not constitute any limitation on the quantity of message types.

Optionally, that the capability information indicates a first message type includes: The capability information includes information indicating the one or more message types supported by the first device.

Structures (for example, frame structures) of different message types may be predefined, for example, predefined in a protocol. Different devices may have different capabilities and support different message types, and different message types may have different structures.

The first device is used as an example. That the first device supports a message type may be understood as that the first device, as a message receiver, can receive, parse, and process a message of the message type; and/or the first device, as a message sender, can generate and send a message of the message type. Herein, generation corresponds to parsing, and sending corresponds to receiving. Generation may mean that a message of this type can be generated based on a predefined structure, and parsing may mean that content in the message can be obtained through parsing from the message based on the predefined structure. Processing may mean that the first device can respond to the content after obtaining the content in the message through parsing.

Because different messages need to be used in different application scenarios, different message types may be defined for different application scenarios. Therefore, the message type set supported by the first device may alternatively be reflected by an application scenario supported by the first device. It may be understood that, in an application scenario, one message type may be used, or a plurality of message types may be used. Therefore, there may be one or more message types corresponding to one application scenario supported by the first device.

Optionally, the message type in the message type set is used in one or more application scenarios supported by the first device, and that the capability information indicates a message type set includes: The capability information includes information indicating the one or more application scenarios supported by the first device.

The message type supported by the first device and the application scenario supported by the first device may alternatively be sent together by using the first message, to indicate a capability of the first device, so that a device that receives the first message can better select a cooperation device.

Optionally, that the capability information indicates a first message type includes: The capability information includes the information indicating the one or more message types supported by the first device, and the information indicating the one or more application scenarios supported by the first device.

The message type supported by the first device and the application scenario supported by the first device may be carried in different fields of the first message, so that the message type supported by the first device and the application scenario supported by the first device are separately indicated by codes in the different fields.

The message type supported by the first device may be determined from a plurality of predefined message types, and the application scenario supported by the first device may also be determined from a plurality of predefined application scenarios.

For example, the plurality of predefined message types include but are not limited to a BSM, a PAM, a CLPMM, a PSM, an RTCM, RSC, an RSM, an SSM, a VIR, a VPM, and the like. Some message types, such as the VPM and the VIR, are used for sending by the vehicle-end device. Some message types, such as the RSC, the RSM, and the CLPMM, are used for sending by the road side device. Some message types such as the PSM may be used for sending by the terminal device.

The predefined application scenarios may include but are not limited to sensor data sharing, a cooperative lane change, cooperative vehicle merge, cooperative intersection passing, a differential data service, dynamic lane management, cooperative high priority vehicle passing, a guidance service in parking area, probe data collection, vulnerable road user safe passing, cooperative platooning management, a road tolling service, and the like.

Different application scenarios may correspond to different scenarios, and are applicable to different devices. For example, the cooperative lane change, the cooperative vehicle merge, and the cooperative intersection passing are applicable to a vehicle, and the vulnerable road user safe passing is applicable to a vulnerable traffic participant. Different devices support different message types. Therefore, different message types can be used in different application scenarios.

Table 1 shows a plurality of possible application scenarios, a communication mode used in each application scenario, a corresponding scenario classification, and a used message type.

Table 1 provides several typical application scenarios for fields such as safety, efficiency, traffic management, and advanced intelligent driving.

As shown in Table 1, a scenario classification to which the sensor data sharing belongs is safety, a used communication mode may include V2V and V2I, and a specific available message type may include SSM; a scenario classification to which the cooperative lane change belongs is a safety scenario, a used communication mode may include V2V and V2I, and a specific available message type may include VIR; a scenario classification to which the cooperative vehicle merge belongs is safety and efficiency, a used communication mode includes V2I, and a specific available message type may include RSC and VIR. RSC is a message type sent by the road side device, and VIR is a message type sent by the vehicle-end device. The rest may be deduced by analogy, and examples are not enumerated herein one by one.

**Table 1**

| Sequence number | Application scenario | Communication mode | Triggering manner | Scenario classification | Main message type |
|---|---|---|---|---|---|
| 1 | Sensor data sharing (SDS) | V2V/V2I | Event | Safety | SSM |
| 2 | Cooperative lane change (CLC) | V2V/V2I | Event | Safety | VIR |
| 3 | Cooperative vehicle merge (CVM) | V2I | Event | Safety/Efficiency | RSC/VIR |
| 4 | Cooperative intersection passing (CIP) | V2I | Event/Period | Safety/Efficiency | RSC |
| 5 | Differential data service (DDS) | V2I | Period | Information service | RTCM |
| 6 | Dynamic lane management (DLM) | V2I | Event/Period | Efficiency/Traffic management | RSC |
| 7 | Cooperative high priority vehicle passing (CHPVP) | V2I | Event | Efficiency | VIR/RSC |
| 8 | Guidance service in parking area (GSPA) | V2I | Event/Period | Information service | PAM/VIR |
| 9 | Probe data collection (PDC) | V2I | Period/Event | Traffic management | BSM/VIR/SSM |
| 10 | Vulnerable road user safe passing (VRSUP) | P2X | Period | Safety | PSM |
| 11 | Cooperative platooning management (CPM) | V2V | Event/Period | Advanced intelligent driving | CLPMM |
| 12 | Road tolling service (RTS) | V2I | Event/Period | Efficiency/Information service | VPM |
| ... | ... | ... | ... | ... | ... |

It should be understood that main message types corresponding to different application scenarios shown in Table 1 are merely examples, and all message types corresponding to each application scenario are not listed. During actual implementation, more message types can be used based on different requirements and service levels. In addition, the application scenarios shown in Table 1 are merely examples, and not all possible application scenarios are included.

The following briefly describes each application scenario in Table 1.

Sensor data sharing: A vehicle and a road side device detect, by using sensing devices (sensors such as cameras or radars) carried on the vehicle and the road side device, information about another surrounding traffic participant (including but not limited to a target object like a vehicle, a pedestrian, or a rider) or an abnormal road condition, for example, information about a road traffic event (for example, a traffic accident), an abnormal vehicle behavior (for example, speeding, driving off a lane, wrong-way driving, unconventional driving, or abnormal stopping), a road obstacle (for example, a falling stone, a leftover, or a dead branch), and a road condition (for example, water accumulation or icing), process detected target information, and send processed information to another surrounding vehicle through V2X. The another vehicle that receives the information may sense, in advance, a traffic participant or an abnormal road condition that is not within a field of view of the another vehicle, and assist the another vehicle in making correct driving decisions, to reduce traffic accidents and secondary injuries, and improve driving safety or passing efficiency.

Cooperative lane change: When a vehicle (denoted as a vehicle A for ease of differentiation) needs to change a lane in a traveling process, the vehicle sends a traveling intention to another related vehicle in a related lane (including the lane in which the vehicle is currently located and a target lane to which the vehicle is expected to change) or a road side device. The related vehicle receives intention information of the vehicle A or scheduling information of the road side device, and adjusts a traveling behavior based on a situation of the related vehicle, so that the vehicle A can securely complete the lane change or delay the lane change.

Cooperative vehicle merge: At an entrance ramp of a highway or an expressway, a road side device obtains running information and a traveling intention of a surrounding vehicle, and sends vehicle guidance information to coordinate a vehicle that merges into a main road from the ramp and a vehicle on the main road, to assist the vehicle at the ramp in safely and efficiently merging into the main road. This application scenario may include, for example, merge at an entrance ramp of a highway or an expressway.

Cooperative intersection passing: A vehicle cooperates with a road side device, to securely and efficiently pass through an intersection. The vehicle sends vehicle traveling information to the road side device. The road side device generates, based on the vehicle traveling information, signal light information of a target intersection, traveling information reported by another vehicle, and road side sensing information, passing scheduling information for the vehicle to pass through the intersection, and sends the passing scheduling information to the vehicle, to schedule the vehicle to safely pass through the intersection. This application scenario may include, for example, passing at intersections of a common road and a highway in a city, a suburban area, a closed campus, or the like, and traffic at an intersection without signal lights or the like.

Differential data service: a navigation and positioning enhancement technology implemented through V2X interaction. An infrastructure (for example, a global navigation satellite system (global navigation satellite system, GNSS) reference station or a foundation enhancement system) deployed in an area is used to monitor GNSS satellites in a field of view, obtain error correction parameters and integrity information through centralized data processing and classification, and broadcast the error correction parameters and the integrity information to a vehicle in a range through V2X interaction, to improve vehicle positioning accuracy.

Dynamic lane management: For a congestion problem at an intersection, space resources of an entrance at the intersection can be appropriately allocated in real time by using a dynamic lane division function at the intersection. Through real-time communication between vehicles and a road side device in an intersection range, the road side device collects status data of a vehicle (for example, a vehicle having a wireless communication function) and senses, through a sensing device, status data of a vehicle (for example, a vehicle having no wireless communication function) at the intersection, including locations, speeds, steering directions, and the like, determines a traffic requirement in each flow direction at the intersection in real time, performs lane function division on the entrance based on the traffic requirement, and sends a lane function division result to the vehicle. In this way, running efficiency at the intersection is improved through dynamic lane management.

Cooperative high priority vehicle passing: An intelligent transportation system schedules traffic resources for a high-priority vehicle by reserving a lane in advance, closing a road, switching traffic lights, or the like, to provide a green channel for the high-priority vehicle to reach a destination safely and efficiently. The high-priority vehicle includes a police car, a fire engine, an ambulance, an engineering rescue vehicle, an accident survey vehicle, and the like. In the future, differentiated traveling services may also be provided based on this scenario. This document is applicable to cities and highways.

Guidance service in parking area: In an internal area of a parking area (for example, a parking lot, a highway service station, or a gas station), a road side device provides station map information, parking space information, service information, and the like for an incoming vehicle in a V2I or infrastructure to vehicle (infrastructure to vehicle, I2V) manner, and provides a path guidance service for the vehicle.

Probe data collection: A road side device receives information (including a traveling status, a driving intention, sensing information, and the like) sent by a vehicle in a communication range, performs data fusion and traffic status analysis, and forms traffic status evaluation, based on probe vehicle data, on a local road side or an edge side.

Vulnerable road user safe passing: A vulnerable traffic participant relies on a device that is of the vulnerable traffic participant and that has a wireless communication capability, to send basic safety messages such as information and a motion status of the vulnerable traffic participant in real time, receive a safety message of a surrounding vehicle, and support warning of a potential collision risk of a vehicle to the vulnerable traffic participant and warning of a potential collision risk of the vulnerable traffic participant to the vehicle. Vulnerable traffic participants are diversified in types, including pedestrians, cyclists, powered two-wheeled vehicles, and the like.

Cooperative platooning management: A vehicle platoon is led by a manual driving or autonomous driving lead vehicle, includes several autonomous driving vehicles, and moves in a traveling form of a queue. Members of the vehicle platoon keep a specific distance and a stable speed, and cruise in an orderly traveling status. A vehicle platooning system needs to implement process management and data communication of vehicle platooning, including status switching such as creating a platoon, joining a platoon, platoon cruising, leaving a platoon, and dismissing a platoon. This establishment process is a dynamic open interactive system, and is not limited by a system boundary. All vehicles participating in the cooperative platooning management application need to have a wireless communication capability.

Road tolling service: When a vehicle enters a tolling area of a city road or a highway, the vehicle receives tolling information released by a road side and completes a payment service through vehicle-road interaction, including open tolling (such as tolling for road bridges and congestion) and area-based tolling (such as tolling for high-speed roads and parking lots). A road side device having a wireless communication capability is deployed at a toll station, and is connected to a background tolling system. After a vehicle having a wireless communication function enters the tolling area, and mutual identity authentication is completed, tolling is automatically performed.

It can be learned from the applications listed above that, in all these application scenarios, a vehicle needs to have a wireless communication capability and a capability of supporting message types corresponding to these applications, for example, a capability of performing cooperative lane change, cooperative vehicle merge, and cooperative intersection passing between vehicle-end devices or between a vehicle-end device and a road side device, or a capability of performing sensor data sharing between road side devices or between a road side device and a vehicle-end device or between terminal devices. Such cases are not listed one by one herein.

Therefore, the capability information of the first device may also be understood as information indicating a cooperation capability of the first device, and the cooperation capability of the first device may be represented by the message type supported by the first device and/or the application scenario supported by the first device.

In this embodiment of this application, the first device determines the capability information based on the message type and/or the application scenario supported by the first device, and then generates the first message.

For example, different message types may correspond to different codes, and different application scenarios may also correspond to different codes. Table 2 shows an example in which different message types correspond to different codes, and Table 3 shows an example in which different application scenarios correspond to different codes.

**Table 2**

| Code | Message type |
|---|---|
| 0000 0001 | VIR |
| 0000 0010 | RSC |
| 0000 0100 | MAP |
| 0000 1000 | PSM |
| ... | ... |

**Table 3**

| Code | Application scenario |
|---|---|
| 0000 0001 | CLC |
| 0000 0010 | CVM |
| 0000 0100 | CIP |
| 0000 1000 | CHPVP |
| ... | ... |

Lengths of codes in Table 2 and Table 3 are 8 bits.

It can be learned from Table 2 that each bit in the code may correspond to one message type, 8 bits in Table 2 may be in a one-to-one correspondence with eight message types, and a value of each bit indicates whether a message type corresponding to the bit is supported. In an example, it is assumed that the message type supported by the first device includes the VIR and the RSC. In this case, the message type supported by the first device may be represented by a code "0000 0011".

Similar to that in Table 2, each bit in the code shown in Table 3 may correspond to one application scenario, 8 bits in Table 3 may be in a one-to-one correspondence with eight application scenarios, and a value of each bit indicates whether an application scenario corresponding to the bit is supported. In an example, it is assumed that the application scenario supported by the first device includes the CLC, the CVM, and the CIP, and the application scenario may be represented by a code "0000 0111". The same rule applies to other cases, and details are not described herein again.

It should be understood that the correspondence between the codes and the message types shown in Table 2 and the correspondence between the codes and the application scenarios shown in Table 3 are merely examples. This application includes but is not limited thereto. For example, the length (namely, a quantity of bits) of the code may be longer or shorter, to correspond to more or fewer message types or application scenarios. For another example, each code indicates one message type or one application scenario. When the device supports a plurality of message types or application scenarios, the capability information may include more codes having bits.

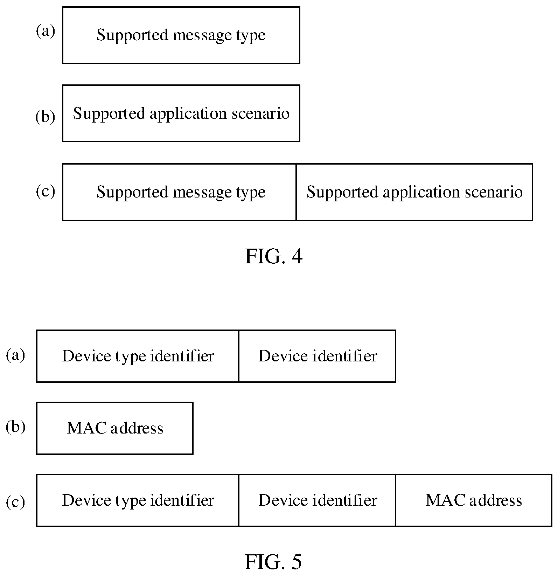

(a), (b), and (c) in FIG. 4 respectively show several possible examples of the capability information of the first device. The capability information of the first device shown in (a) in FIG. 4 includes information indicating the message type supported by the first device; the capability information of the first device shown in (b) in FIG. 4 includes information indicating the application scenario supported by the first device; and the capability information of the first device shown in (c) in FIG. 4 includes information indicating the message type supported by the first device and information indicating the application scenario supported by the first device. A sequence of the information shown in (c) in FIG. 4 is not limited in this application. For example, the information indicating the message type supported by the first device may be after the information indicating the application scenario supported by the first device.

It should be understood that content included in the capability information may be predefined. For example, the content includes a supported message type, or includes a supported application scenario, or includes a supported message type and application scenario. A sequence of the content in the capability information may also be predefined. In this way, another device that receives the first message may determine the capability of the first device based on the content included in the capability information and the sequence of the content.

Optionally, the first message further includes identifier information and/or a physical address of the first device.

The identification information is used to identify the first device. Each device may be indicated by one piece of identifier information.

Currently, different types of devices may be distinguished by using identifier types. Table 4 shows a correspondence between different ID types and different codes.

**Table 4**

| Code | ID type |
|---|---|
| 00 | VID |
| 01 | RSU ID |
| 10 | VRU ID |
| 11 | Reserved |
| ... | ... |

It can be learned that the three types of devices, namely, the vehicle-end device, the road side device, and the terminal device, are respectively identified by using different codes "00", "01", and "11". The code may be considered as a possible form of a device type identifier. This application includes but is not limited thereto.

To further distinguish between different devices, a device identifier may be further used for distinguishing. In this way, a combination of the device type identifier and the device identifier may be used to uniquely identify a device in a plurality of types of devices.

For example, a device identifier of the vehicle-end device may be a vehicle identifier (vehicle identifier, VID), a device identifier of the road side device may be a road side unit (RSU) identifier (identifier, ID) (RSU ID), and a device identifier of the terminal device may be a vulnerable road user identifier (VRU ID). Certainly, a device identifier of each type of device may alternatively be in another form, provided that the device identifier can be used to uniquely identify a device in the device type. A specific form of the device identifier is not limited in this application.

In conclusion, a possible design in which the identifier information may be obtained is that the identifier information includes a device type identifier and a device identifier. The device type identifier indicates a type to which a device belongs, and the device identifier indicates an identifier of the device in the type to which the device belongs. For example, for the first device, the identifier information of the first device includes an identifier of a device type of the first device and a device identifier of the first device.

It should be understood that the identifier information in the foregoing example is merely a possible design. In another possible design, the identifier information may alternatively include a device identifier but not a device type identifier. In this case, device identifiers of various types of devices may be different from each other, and a device identifier of each device may be used to uniquely identify the device.

The physical address of the first device may include, for example, but is not limited to, a media access control (medium access control, MAC) address of the first device.

In a communication process, if the first device needs to communicate with another device, the first device may use the MAC address of the first device as a source MAC address to communicate with the another device. If the another device needs to communicate with the first device, the another device may use the MAC address of the first device as a destination MAC address to communicate with the first device. Therefore, the MAC address of the first device may be carried in the first message, so that the another device obtains the MAC address of the first device from the received first message.

It should be understood that the MAC address is merely an example of the physical address, and should not constitute any limitation on this application. This application does not exclude a possibility that another physical address is defined in a future protocol to implement a function that is the same as or similar to the MAC address.

Because there is a correspondence between a physical address and a device, and different devices correspond to different physical addresses, the physical address may also be considered as information used to identify a device identity. The identifier information and the physical address may also be collectively referred to as identity information. The identity information may include the identifier information and/or the physical address. In addition to the capability information of the first device, the first message may further include identity information of the first device.

(a), (b), and (c) in FIG. 5 respectively show several possible examples of the identity information of the first device. The identity information of the first device shown in (a) in FIG. 5 includes the identifier information of the first device, and specifically includes the identifier of the device type of the first device and the device identifier. The identity information shown in (b) in FIG. 5 includes the MAC address of the first device. The identity information shown in (c) in FIG. 5 includes the identifier of the device type of the first devices, the device identifier, and the MAC address of the first device. A sequence of the content in FIG. 5 is not limited in this application. For example, the MAC address may be before the device type identifier and the device identifier. For another example, the device type identifier may be after the device identifier.

It should be understood that content included in the identity information may be predefined, for example, whether the identity information includes the device type identifier and the device identifier, or includes the MAC address, or includes the device type identifier, the device identifier, and the MAC address. The sequence of the content in the identity information may also be predefined. In this way, another device that receives the first message may determine the identity of the first device based on the content included in the identity information and the sequence of the content.

It may be understood that, as several examples of the identity information, (a), (b), and (c) in FIG. 5 may be combined in pairs with the supported message type and/or the supported application scenario (namely, (a), (b), and (c) in FIG. 4) included in the capability information described above, to obtain the first message.

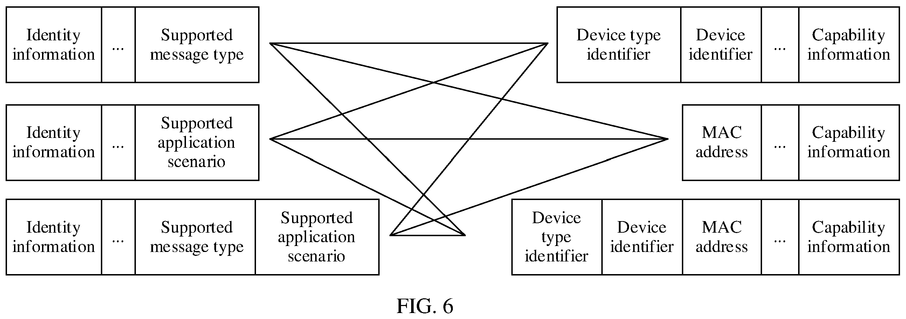

For ease of understanding, FIG. 6 shows several possible examples in which the first message includes the capability information and the identity information. Details are as follows:

In an example, the first message includes the message type supported by the first device, the identifier of the device type of the first device, and the device identifier of the first device.

In another example, the first message includes the application scenario supported by the first device, the identifier of the device type of the first device, and the device type of the first device.

In another example, the first message includes the message type and the application scenario that are supported by the first device, the identifier of the device type of the first device, and the device identifier of the first device.

In another example, the first message includes the message type supported by the first device and the MAC address of the first device.

In another example, the first message includes the application scenario supported by the first device and the MAC address of the first device.

In another example, the first message includes the message type and the application scenario that are supported by the first device, and the MAC address of the first device.

In another example, the first message includes the message type supported by the first device, the identifier of the device type of the first device, the device identifier of the first device, and the MAC address of the first device.

In another example, the first message includes the application scenario supported by the first device, the identifier of the device type of the first device, the device identifier of the first device, and the MAC address of the first device.

In another example, the first message includes the message type and the application scenario that are supported by the first device, the identifier of the device type of the first device, the device identifier of the first device, and the MAC address of the first device.

It may be understood that information included in the first message may be predefined, and a sequence of the information in the first message may also be predefined. In this way, another device that receives the first message may parse the first message based on the information included in the first message and the sequence of the information.

Optionally, the first message further includes location information, and the location information indicates a location of the first device.

In other words, in addition to the capability information of the first device, the first message may further include the identity information and/or the location information of the first device.

The location information of the first device is carried in the first message, so that another device (for example, the second device) that receives the first message can determine a distance between the another device and the first device, and when there is a cooperation intention, the another device determines whether to send a cooperation request to the first device. Related content about how the another device uses the location information of the first device is described in detail in step 330 below, and is not described in detail herein.

The foregoing describes in detail the information in the first message. The following provides several possible implementations in which the first device generates the first message.

In a possible implementation in which the first device generates the first message, the first device generates the first message at a network layer. The first message is a network-layer message. In other words, the capability information is carried in the network-layer message.

It can be learned from the foregoing protocol stack architecture for communication between devices that a protocol stack may include an access layer, the network layer, and an application layer. The application layer may determine a capability of the device, that is, may determine an application scenario and a message type that are supported by the device. Therefore, the application layer may transmit, to the network layer by using a cross-layer primitive, the application scenario and/or the message type supported by the device, so that the network layer (for example, a DME of the network layer) generates the first message based on the received information.

In a possible design, the first message is a dedicated service advertisement (dedicated service advertisement, DSA), and the capability information is carried in a DSA header extension (DSA Header Extension) field or a DSA application extension (DSA Application Extension) field.

The DSA is a message generated by the network layer, and is sent after being encapsulated by the access layer.

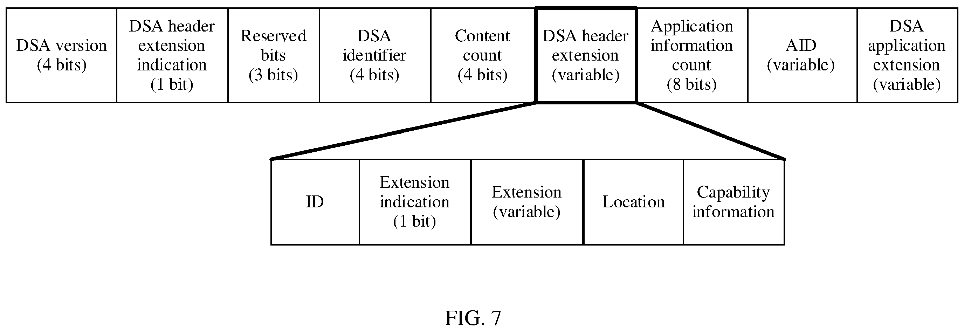

FIG. 7 is an example in which the capability information is carried in the DSA header extension field. As shown in FIG. 7, the DSA includes: a 4-bit DSA version (DSA Version) field, a 1-bit DSA header extension indication (DSA Header Extension Indication) field, a 3-bit reserved (Reserved) field, a 4-bit DSA identifier (DSA Identifier) field, a 4-bit content count (Content Count) field, a variable (variable, Var) DSA header extension field, an 8-bit application information count (Application info Count) field, a variable application identifier (application identifier, AID) field, and a variable DSA application extension field.

For specific lengths and carried content of the DSA version field, the DSA header extension indication field, the DSA identifier field, the content count field, the application information count field, and the AID field, refer to the conventional technology. Details are not described herein.

In the example shown in FIG. 7, the capability information is carried in the DSAheader extension field. The DSA header extension field may further include the identity information and/or the location information.

In a possible example, the DSA header extension field further includes the following subfields: an identity information subfield, an extension indication subfield, an extension subfield, a location information subfield, and a capability information subfield. The identity information subfield is used to carry the identity information, for example, the identifier information and/or the physical address. The extension indication subfield indicates whether the DSA header extension field includes extension information. For example, "1" indicates that the extension information is included, and "0" indicates that the extension information is not included. The extension subfield is used to carry the extension information, and the extension information may include information other than existing information in the DSA header extension field and the capability information, the identity information, and the location information proposed in this specification. The location information subfield is used to carry the location information. The capability information subfield is used to carry the capability information, for example, the supported message type and/or application scenario.

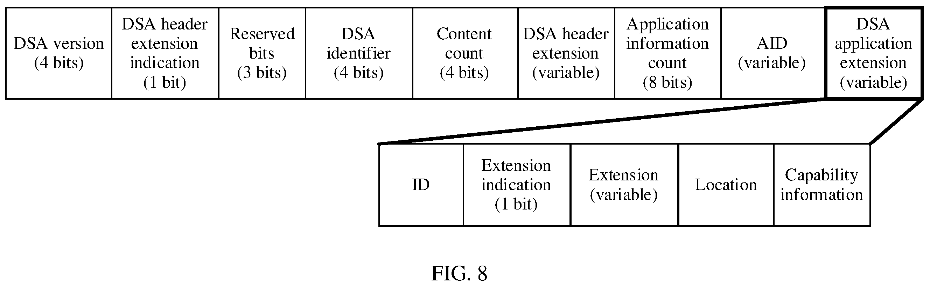

FIG. 8 is an example in which the capability information is carried in the DSA application extension field. The foregoing has described each field in the DSA in detail with reference to FIG. 7, and details are not described herein again. When the DSA application extension field is used to carry the capability information, the DSA application extension field may also include the plurality of subfields shown in FIG. 7: the identity information subfield, the extension indication subfield, the extension subfield, the location information subfield, and the capability information subfield. The foregoing has described a function of each subfield in detail, and details are described herein.

It should be understood that the subfields shown in FIG. 7 and FIG. 8 are merely examples, and should not constitute any limitation on this application. For example, the first message may not include the identity information and the location information. Correspondingly, the DSA header extension field or the DSA application extension field used to carry the capability information may not include the identity information and/or the location information. Alternatively, the first message may include the identity information and/or the location information, but the identity information and/or the location information is carried in another field. In addition, a sequence of the subfields in the DSA header extension field or the DSA application extension field that is used to carry the capability information is not limited in this application. For example, the extension indication subfield may be located before the identity information subfield.

In another possible implementation in which the first device generates the first message, the first device generates the first message at an application layer.

Different from the foregoing implementation, the first device may alternatively generate the first message at the application layer, and then transmit the first message to an access layer through a network layer. The first message is an application-layer message. In other words, the capability information is carried in the application-layer message.

Because the application layer of the first device may determine the capability of the device, the first device may directly generate the capability information at the application layer, and then encapsulate the capability information into the first message.

In a possible design, the first message is of a newly designed message type. The message type of the first message is, for example, a support cooperation type (support cooperation type, SCT).

In other words, for the capability information of the first device, a new message type may be designed to carry the capability information. Because the capability information indicates the capability of the first device, the newly designed message type may be named SCT.

It can be learned from the foregoing descriptions of the first message that the first message may include the capability information of the first device, and may further include the identity information and/or the location information of the first device. For a design of each field in the first message, refer to the foregoing descriptions with reference to FIG. 7 and FIG. 8. Details are not described herein again.

In another possible design, the first message is a BSM, an RSM, or a PSM, and the capability information is carried in a field indicating the message type supported by the first device and/or a field indicating the application scenario supported by the first device in the first message.

The BSM is a type of message supported by the vehicle-end device, the RSM is a type of message supported by the road side device, and the PSM is a type of message supported by the terminal device carried by the vulnerable road user. In other words, different types of devices may carry respective capability information by using different types of messages.

Because the BSM, the RSM, and the PSM include respective identity information and location information, the field used to carry the capability information is added based on an existing field, so that the capability information, the identity information, and the location information can be carried in the first message.

Because the capability information of the first device may specifically include the information indicating the message type supported by the first device and/or the information indicating the application scenario supported by the first device, the first message may include the corresponding field indicating the message type supported by the first device and/or the corresponding field indicating the application scenario supported by the first device. An example of the field indicating the message type supported by the first device is a supported message type field, and is used to carry the message type supported by the first device. An example of the field indicating the application scenario supported by the first device is a supported application scenario field, and is used to carry the application scenario supported by the first device.

It should be understood that the supported message type field used to carry the message type supported by the first device and the supported application scenario field used to carry the application scenario supported by the first device are merely two possible names, and should not constitute any limitation on this application. For example, the first message may also include a capability information field. As shown in FIG. 7 or FIG. 8, the capability information field is used to carry the message type supported by the first device and/or the application scenario supported by the first device. Alternatively, the first message includes: the field indicating the message type supported by the first device, used to carry the message type supported by the first device; and the field indicating the application scenario supported by the first device, used to carry the application function scenario supported by the first device. Examples are not described herein again.

In step 320, the first device sends the first message. Correspondingly, the second device receives the first message.

The first device may send the first message through the access layer, specifically, through a communication interface (for example, the foregoing PC interface and/or Uu interface) at the access layer.

Optionally, the first message is a broadcast message. In other words, in a possible implementation in which the first device sends the first message, the first device sends the first message in a broadcast manner.

Optionally, the first message is a periodically sent message. In other words, in a possible implementation in which the first device sends the first message, the first device periodically sends the first message. A period in which the first device sends the first message may be determined by the first device, or may be predefined by a protocol. This is not limited in this application. The period in which the first device sends the first message may be, for example, 2 seconds, 1 second, or 0.5 second. Specific duration of the period in which the first device sends the first message is not limited in this application either.

Optionally, the first message is a message sent in response to triggering of a preset event. In other words, the first device may send the first message in response to triggering of the preset event. The preset event may be predefined in a protocol. For example, the preset event may be first access to a network, an application scenario in a predefined application scenario, a cooperation intention, a capability information change (for example, the capability of the first device is limited due to power control or the like), an identity information change (for example, a MAC address change), or a location change of the first device. This is not limited in this application.

The foregoing several possible implementations in which the first device sends the first message may be used separately, or may be used in combination when no conflict occurs. In an example of combined use, the first device periodically sends the first message in a broadcast manner. In another example of combined use, the first device sends the first message in a broadcast manner in response to triggering of the preset event. In another example of combined use, the first device periodically sends the first message in a broadcast manner, and sends the first message again in the broadcast manner when the preset event is triggered.

It may be understood that, although the first device may repeatedly send the first message, information in the first message may change. For example, the capability information changes, or the MAC address changes.

Corresponding to the first device, the device that receives the first message may obtain the capability information of the first device by parsing the first message. When the first message further includes the identity information and/or the location information of the first device, the identity information and/or the location information of the first device is further obtained.

Without loss of generality, the following uses the second device as an example to describe steps performed after the first message is received. It may be understood that the second device may be a device in a communication signal coverage area of the first device. Therefore, the second device is a device near the first device. In other words, in a condition supported by capabilities of the two parties, the first device and the second device may be mutual cooperation devices.

After receiving the first message, the second device may locally store the information obtained through parsing. For example, the second device may also have the protocol stack shown in FIG. 2. The second device may parse the information in the first message, and then store the information at an application layer. For example, a cooperation capability table is maintained at the application layer, to record capability information of each device.

Table 5 shows an example of the cooperation capability table.

**Table 5**

| Identity information | Location information | ... | Capability |
|---|---|---|---|
| Device 1 | Location 1 | ... | Message type set 1 |
| Device 2 | Location 2 | ... | Message type set 2 |
| ... | ... | ... | ... |

It should be understood that both the device 1 and the device 2 in the table may be considered as examples of the first device. It should be further understood that the cooperation capability table shown in Table 5 is merely an example, and the cooperation capability table may include more or less information, for example, may not include the location information. The second device may alternatively store, in another manner, the capability information received from each device, for example, store the capability information of each device in a form of an array.

Corresponding to the two possible implementations in which the first device generates the first message, the second device may parse the first message at a network layer, or may parse the first message at the application layer.

If the first message is a message generated by the first device at the network layer, the second device may parse the first message at the network layer, to obtain the information in the first message. For example, after receiving the first message through an access layer, the second device may upload the first message to the network layer, and the network layer parses each field in the first message based on a predefined format of the first message, to obtain the information carried in the first message.

If the first message is a message generated by the first device at the application layer, the second device may parse the first message at the application layer, to obtain the information in the first message. For example, after receiving the first message through the access layer, the second device may upload the first message to the network layer. The network layer may upload the first message to the application layer by using a cross-layer primitive. The application layer may parse each field in the first message based on a predefined format of the first message, to obtain the information carried in the first message.

It may be understood that a process in which the second device parses the first message corresponds to a process in which the first device generates the first message. Whether generation and parsing of the first message are specifically performed by the network layer or the application layer may be predefined by a protocol. Which pieces of information in the capability information, the identity information, and the location information are carried in the first message, and a field in which each piece of information is located in the first message may also be predefined by the protocol. In this way, after receiving the first message sent by the first device, the second device can accurately parse the information in the first message.

Optionally, the method further includes: The second device updates the cooperation capability table when at least one of the following conditions is met:
condition 1: Duration from time at which the first message is most recently received reaches a preset threshold (denoted as a first preset threshold for ease of differentiation and description);
condition 2: The information in the first message is inconsistent with information locally stored in the second device; or
condition 3: A distance between the first device and the second device is greater than a preset threshold (denoted as a second preset threshold for ease of differentiation and description).

The following describes the conditions in detail.

Condition 1: The duration from the time at which the first message is most recently received reaches the first preset threshold.

The duration from the time at which the first message is most recently received may be calculated by using current time as a reference, and the condition 1 is that an interval for the second device to fall back from the current time to the time at which the first message is most recently received reaches the first preset threshold. Longer duration from the time at which the second device receives the first message most recently, that is, longer time for storing the information in the first message in the cooperation capability table of the second device, indicates longer duration from sending of the first message by the first device. This also means that some information of the first device may change. For example, the location information changes, and the first device is far away from the second device. For another example, the MAC address changes. Therefore, the information in the first message originally stored in the second device can no longer reflect a real status of the first device, and may be deleted.

Condition 2: The information in the first message is inconsistent with the information locally stored in the second device.

Because the capability information of the first device may change, when the capability information in the received first message is inconsistent with the locally stored capability information, the second device may update the local cooperation capability table. It may be understood that the capability information locally stored in the second device may be capability information in a first message previously received by the second device.

In addition to the capability information, the identity information and the location information of the first device may also change. Therefore, when at least one of the capability information, the identity information, or the location information in the received first message is inconsistent with the locally stored information, the second device may update the local cooperation capability table.

As described above, the first device may periodically send the first message, or send the first message based on triggering of a predefined event. Therefore, if the first device is still in an area near the second device, the second device may receive the first message sent by the first device again. Because a first message received later can more truly represent a status of the first device than a first message received earlier, the second device may update, based on a first message received most recently, the information in the first message stored in the cooperation capability table.

Condition 3: The distance between the first device and the second device is greater than the second preset threshold.

If the second device detects that the distance between the second device and the first device is large, for example, is greater than the second preset threshold, there is a low probability that the second device cooperates with the first device, and the second device does not need to store the information of the first device. Therefore, the second device may delete the information in the first message stored in the cooperation capability table. The distance between the second device and the first device may be determined by using location information of the second device and the first device. For example, the second device may determine a location of the second device by using a positioning system of the second device, for example, a GPS positioning system, and may obtain the location of the first device by communicating with the first device, to calculate the distance between the second device and the first device. For another example, the second device may transmit a sensing signal by using a radar configured for the second device, to estimate the distance between the second device and the first device by using the sensing signal. A specific manner in which the second device determines the distance between the second device and the first device is not limited in this application.

In conclusion, the second device may update the local cooperation capability table when any one or more of the foregoing conditions are met.

Because the second device may receive messages from a plurality of devices, if the second device determines, for a message of each device, whether the foregoing conditions are met, large computing resource overheads may be caused. A possible solution is that the second device periodically updates the local cooperation capability table. The local cooperation capability table is periodically updated, so that the cooperation capability table locally maintained by the second device can ensure, to an extent, freshness of information, and match a real status of each device. This helps the second device make an appropriate decision when there is a cooperation intention and the second device selects a cooperation device.

In step 330, the second device sends a second message to the first device based on the capability information, where a message type of the second message belongs to the message type set.

The second message may determine, as a cooperation device based on capability information received from another device (including the first device), a device capable of supporting the message type of the second message to be sent by the second device. Supporting the message type of the second message means that the second message can be received, sent, parsed, and processed.

In this embodiment of this application, for ease of description, it is assumed that the message type set supported by the first device includes the message type of the second message. Therefore, the first device is a device that supports the second message, and may be used as a cooperation device.

Optionally, step 330 specifically includes the following steps.

3301: The second device determines, based on the capability information of the first device, that the first device is capable of supporting a message of a first type, where the first type is a message type used in a first application scenario.

3302: The second device sends the second message to the first device in the first application scenario, where the message type of the second message is the first type.

For example, when the second device is in the first application scenario, the second device may determine, based on the first application scenario, a message type (for example, including the first type) that needs to be used. Therefore, the second message sent by the second device belongs to the first type.

The second device may further determine a device that supports the first type as the cooperation device based on the capability information of the another device.

As described above, the capability information of each device may be stored in the locally maintained cooperation capability table. The second device may determine the cooperation device from the locally maintained cooperation capability table. The second device may specifically determine the cooperation device based on a message type set supported by each device in the cooperation capability table.

For example, the cooperation device may meet that a supported message type includes a message type that may be used by the second device, and/or a supported application scenario includes an application scenario that may be used by the second device. It may be understood that, when a message type supported by a device includes the message type that may be used by the second message, and a supported application scenario includes the application scenario that may be used by the second device, a priority of the device as the cooperation device is higher than that of a device that meets only one of the two conditions.

In addition, the cooperation device may be further determined with reference to a distance between each device and the second device. For example, the cooperation device is determined from devices whose distances to the second device are less than or equal to a third preset threshold.

In a possible example of the cooperation device determined by the second device, the following is met: condition (1): A distance to the second device is less than or equal to the third preset threshold; condition (2): A supported message type includes the message type that may be used by the second device; and condition (3): A supported application scenario includes the application scenario that may be used by the second device.

Certainly, when a device that meets the three conditions cannot be determined from the cooperation capability table, a device that meets two conditions may be determined as the cooperation device. For example, a device that meets the condition (1) and the condition (3) or a device that meets the condition (2) and the condition (3) is selected.

After determining the first device as the cooperation device, the second device may send the second message to the first device.

It may be understood that the second message and the first message type vary with the first application scenario. To better understand the method provided in this application, the following describes the method with reference to several specific application scenarios.

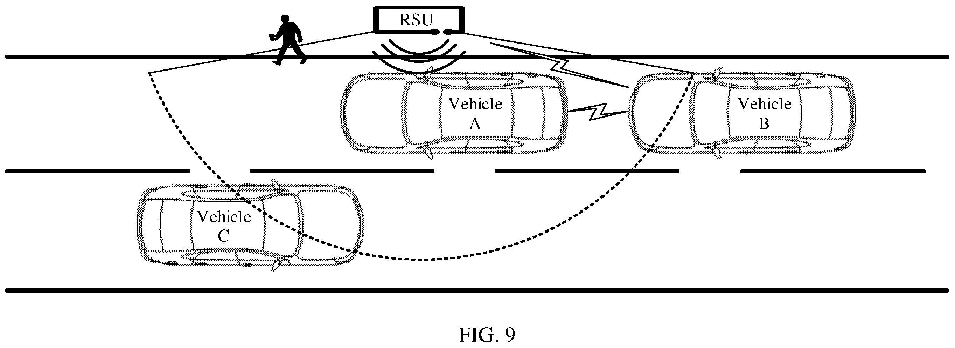

FIG. 9 shows an example of the first application scenario. The first application scenario shown in FIG. 9 is the sensor data sharing, and the message type used in the first application scenario includes the SSM type.

FIG. 9 shows a road side device, namely, an RSU, located on a road side, and a vehicle A and a vehicle B that travel in a same direction in a same lane. The vehicle B travels behind the vehicle A. Therefore, a field of view of the vehicle B is blocked by the first device. In this case, if another vehicle (for example, a vehicle C shown in the figure) moves in a reverse direction on an adjacent lane, or a pedestrian approaches the vehicle A, the vehicle B may not detect the vehicle C or the pedestrian in a timely manner because the field of view is blocked. For ease of description, it is assumed that the vehicle C does not have a wireless communication capability, and all other devices have the wireless communication capability.

In this example, the vehicle B has the wireless communication capability, and may be considered as an example of the second device. Because the field of view of the vehicle B is blocked in the vehicle-follow traveling process, sensor data sharing may be initiated.

When a capability of another surrounding device is not considered, the vehicle B may send a second message to the vehicle A, the RSU, and the vehicle C that are located near the vehicle B. The second message may be a message used to request sensor data sharing. However, if none of the vehicle A, the RSU, and the vehicle C has the wireless communication capability, or has a capability of supporting the second message, the second message sent by the vehicle B cannot be responded in a timely manner.

According to the method provided in this application, the vehicle A and the RSU that have the wireless communication capability may be used as two examples of the first device, and each may send a first message that carries capability information, for example, periodically send the first message, to notify another surrounding device of the capability information of the vehicle A and the RSU.

If both the vehicle A and the RSU have the capability of supporting the second message, the vehicle B may send the second message to the vehicle A and the RSU. After receiving the second message, the vehicle A and the RSU may send, to the vehicle B through wireless communication, data sensed by the vehicle A and the RSU by using sensing devices (for example, cameras or radars carried on the vehicle A and the RSU). In this way, the vehicle B can learn, in a timely manner, that in front of the vehicle B, the vehicle C is traveling in the reverse direction on the adjacent lane, or the pedestrian is approaching the vehicle B, so that a deceleration measure can be taken, to avoid an accident.

If the vehicle A does not have the capability of supporting the second message, but the RSU has the capability of supporting the second message, the vehicle B may not send the second message to the vehicle A, but send the second message to the RSU, so that a channel resource waste caused by sending the second message to the vehicle A can be avoided. In addition, the vehicle B may learn, based on the sensor data received from the RSU, that in front of the vehicle B, the vehicle C is traveling in the reverse direction on the adjacent lane, or the pedestrian is approaching the vehicle B, so that a deceleration measure can be taken, to avoid an accident.

If neither the vehicle A nor the RSU has the capability of supporting the second message, the vehicle B may temporarily not generate and send the second message, so that a processing resource waste caused by generating the second message by the vehicle A and a channel resource waste caused by sending the second message can be avoided.

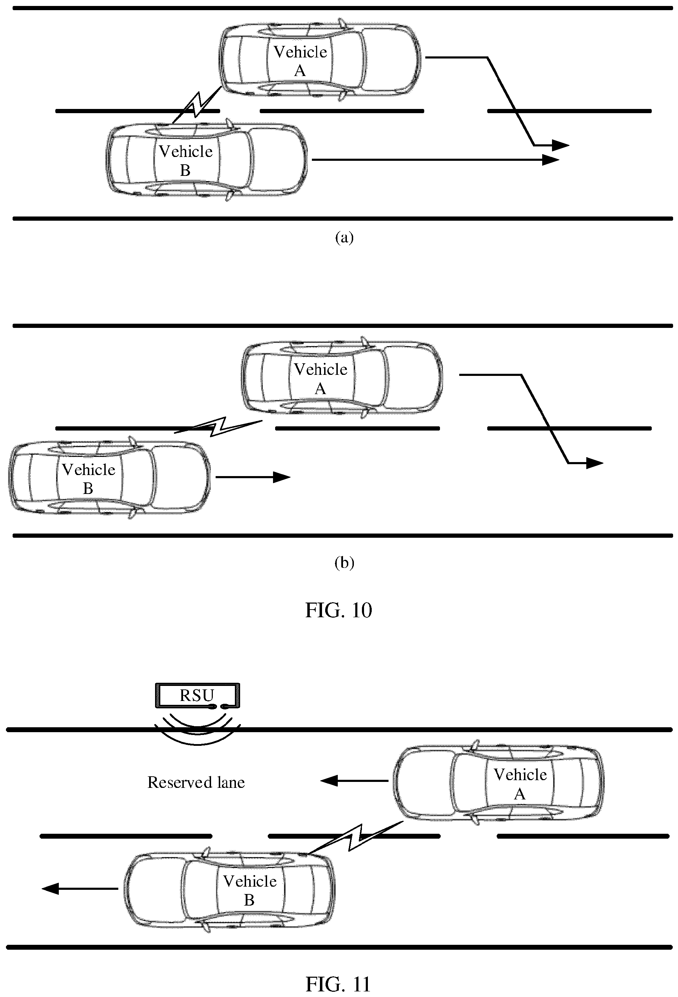

FIG. 10 shows an example of the first application scenario. The first application scenario shown in FIG. 10 is the cooperative lane change, and the message type used in the first application scenario includes the VIR type.

FIG. 10 shows a vehicle A and a vehicle B that travel on a road. The vehicle A and the vehicle B travel on adjacent lanes, and the vehicle A is located in left front of the vehicle B. For ease of description, it is assumed that both the vehicle A and the vehicle B have a wireless communication capability.

If the vehicle A needs to change a lane, the vehicle A may be used as an example of the second device to initiate a cooperative lane change.

When a capability of another surrounding device is not considered, the vehicle A may send a second message to the vehicle B located near the vehicle A. The second message may be a message used to request the cooperative lane change. However, if the vehicle B does not have the wireless communication capability, or does not have a capability of supporting the second message, the second message sent by the vehicle A cannot be responded in a timely manner.

According to the method provided in this application, the vehicle B having the wireless communication capability may be used as an example of the first device, and send a first message that carries capability information, to notify another surrounding device of the capability information of the vehicle B.

If the vehicle B has the capability of supporting the second message, the vehicle B may respond to the second message, and perform decision determining based on information about the vehicle B, information about a surrounding vehicle, or ambient environment information sensed by another vehicle-mounted sensor, to accelerate passing, as shown in (a) in FIG. 10, or decelerate and give way, as shown in (b) in FIG. 10. In addition, the vehicle B may send a driving behavior adjustment of the vehicle B to the vehicle A in a timely manner. In this way, the second message sent by the vehicle A can be responded in a timely manner, and no resource waste is caused. In addition, the vehicle A can safely and efficiently complete the lane change. This helps improve road passing efficiency.

If the vehicle B does not have the capability of supporting the second message, the vehicle A may temporarily not generate and send the second message, so that a processing resource waste caused by generating the second message by the vehicle A and a channel resource waste caused by sending the second message can be avoided.

FIG. 11 shows another example of the first application scenario. The first application scenario shown in FIG. 11 is the cooperative high priority vehicle passing, and the message type used in the first application scenario includes the VIR and the RSC.

FIG. 11 shows a vehicle A and a vehicle B that travel on a road, and a road side device, namely, an RSU. For ease of description, it is assumed that the vehicle A, the vehicle B, and the RSU all have a wireless communication capability.

The vehicle A is a high-priority vehicle, for example, an ambulance or a fire engine, and may preferentially pass. As an example of the second device, the vehicle A may initiate cooperative high priority vehicle passing.

Generally, the vehicle A may send a second message to a road side device (for example, the RSU in the figure) near the vehicle A. The second message may be a message used to request the cooperative high priority vehicle passing, and may carry a traveling route, location information, and the like of the vehicle A. Because the second message is a message sent to the RSU, a message type of the second message may be the RSC. If the RSU can respond to the second message, the RSU may generate a lane reservation policy based on the traveling route and the location information with reference to a current road and traffic flow status, to determine a reserved lane. The reserved lane is determined based on a location and the traveling route of the vehicle A. In this way, a traveling road section in front of the vehicle A can be reserved, so that the vehicle A preferentially passes. The RSU may further send the lane reservation policy to a vehicle on a possible affected road section, for example, the vehicle B, and may provide driving guidance information, to guide the vehicle B to safely leave the reserved lane in a timely manner.

When a capability of another surrounding device is not considered, if the RSU does not have a capability of supporting the second message, the second message sent by the vehicle A cannot be responded in a timely manner, and the vehicle A cannot preferentially pass based on a pre-planned traveling route.

According to the method provided in this application, the vehicle B and the RSU that have the wireless communication capability may be used as two examples of the first device, and each send a first message that carries capability information, to notify another surrounding device of the capability information of the vehicle B and the RSU.

In this example, if the vehicle B has the capability of supporting the second message, the vehicle A may send the second message to the vehicle B. Therefore, a message type of the second message may be the VIR. The vehicle B that receives the second message may leave the reserved lane or not travel into the reserved lane with reference to a location of the vehicle B and a current road and traffic flow status, to provide support for preferential passing of the vehicle A. In this way, the vehicle A can preferentially pass based on the pre-planned route. In addition, before the second message is sent, it is determined to send the second message to the vehicle B having the capability of supporting the second message, so that a channel resource waste caused by sending the VIR message to a traffic participant that does not support the VIR message can also be avoided.

The foregoing describes in detail several possible application scenarios with reference to the method provided in this application and a plurality of accompanying drawings. These descriptions are merely examples, and shall not constitute any limitation on this application. Based on the same concept, the method provided in this application may be further applied to more application scenarios. For brevity, examples are not listed herein one by one.

Based on the foregoing solution, the second device may determine the capability (for example, the supported message type) of each device based on the received capability information of each device, so that when there is a cooperation intention, the second device sends, to a device having a capability that matches the cooperation intention of the second device, a message (namely, the second message) indicating the cooperation intention, and does not send, to a device, a message that does not match a capability of the device. Therefore, there is a high probability that a message sent by the second device is responded to, and a channel resource waste caused by sending, to another device, a message that is not supported by a capability of the another device is not generated. On the contrary, if the second device cannot determine, based on the capability information of each device, a device having a capability that matches the cooperation intention of the second device, the second device temporarily does not send the second message, and does not need to generate the second message. Therefore, the second device can avoid a processing resource waste caused by no response to the generated second message, and can also avoid a channel resource waste caused by no response to the sent second message. In conclusion, the method provided in this application can resolve a problem that a capability of a cooperative initiator does not match a capability of a cooperative receiver, and avoid an unnecessary resource waste caused by sending an invalid request by the initiator. In addition, because each device may notify another device of the capability information of the device, it is also convenient for the devices to work cooperatively, so that efficiency of interaction between the devices can be improved, and passing efficiency and safety can be improved.

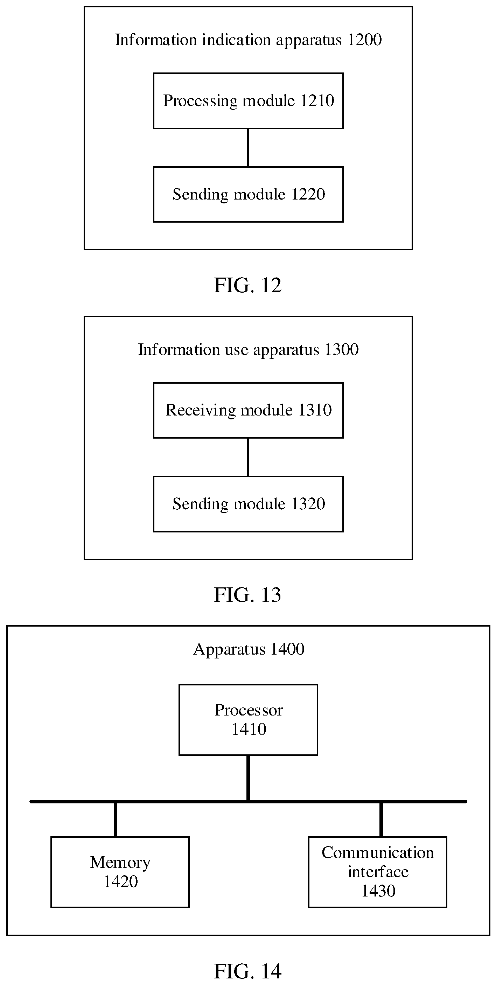

The methods provided in embodiments of this application are described above in detail with reference to FIG. 2 to FIG. 11. Apparatuses provided in embodiments of this application are described below in detail with reference to FIG. 12 to FIG. 14.

FIG. 12 is a block diagram of an information indication apparatus according to an embodiment of this application. As shown in FIG. 12, the information indication apparatus 1200 may include a processing module 1210 and a sending module 1220. A function of the information indication apparatus 1200 may be implemented by using hardware, software, or a combination of software and hardware.

The processing module 1210 may be configured to generate a first message, where the first message includes capability information, the capability information indicates a message type set, and the message type set includes one or more message types supported by the apparatus 1200. The sending module 1220 may be configured to send the first message.

It should be understood that the information indication apparatus 1200 may correspond to the first device in the method 300, and may include modules configured to perform procedures and/or steps corresponding to the first device in the method 300. For brevity, details are not described herein again.

FIG. 13 is a block diagram of an information use apparatus 1300 according to an embodiment of this application. As shown in FIG. 13, the information use apparatus 1300 may include a receiving module 1310 and a sending module 1320. A function of the information use apparatus 1300 may be implemented by using hardware, software, or a combination of software and hardware.

The receiving module 1310 may be configured to receive a first message from a first device, where the first message includes capability information, the capability information indicates a message type set, and the message type set includes one or more message types supported by the first device. The sending module 1320 may be configured to send a second message to the first device, where a message type of the second message belongs to the message type set supported by the first device.

Optionally, the information use apparatus 1300 further includes a processing module, configured to determine that the first device is capable of supporting a message of a first type, where the first type is a message type used in a first application scenario. The sending module 1320 may be specifically configured to send the second message to the first device in the first application scenario, where the message type of the second message is the first type.

Optionally, the information use apparatus 1300 further includes a storage module, configured to store the capability information in the first message in a cooperation capability table.

Further, the storage module is further configured to update the cooperation capability table when at least one of the following conditions is met: Duration from time at which the first message is most recently received reaches a first preset threshold; the capability information in the first message is inconsistent with locally stored capability information; or a distance between the first device and the apparatus is greater than a second preset threshold.

It should be understood that the information use apparatus 1300 may correspond to the second device in the method 300, and may include modules configured to perform procedures and/or steps corresponding to the second device in the method 300. For brevity, details are not described herein again.

It should be further understood that, in embodiments of this application, division into the modules is an example, and is merely logical function division. In an actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

FIG. 14 is another block diagram of an apparatus according to an embodiment of this application. As shown in FIG. 14, as shown in FIG. 14, the apparatus 1400 includes a processor 1410 and a memory 1420, and the processor 1410 is coupled to the memory 1420. The memory 1420 may be configured to store a computer program, and the processor 1410 may be configured to invoke and execute the computer program, so that the apparatus 1400 implements functions of the first device or the second device in the method provided in embodiments of this application.

Optionally, the apparatus 1400 may further include a communication interface 1430. The communication interface 1430 may be a transceiver, an interface, a bus, a circuit, or an apparatus that can implement receiving and sending functions. The communication interface 1430 is configured to communicate with another device through a transmission medium, so that the apparatus 1400 communicates with the another device.

For example, if the apparatus 1400 corresponds to the first device in the foregoing method embodiments, the processor 1410 may be configured to generate a first message, where the first message includes capability information, the capability information indicates a message type set, and the message type set includes one or more message types supported by the apparatus 1400; and may be further configured to control the communication interface 1430 to send the first message. For details, refer to the detailed descriptions in the method 300. Details are not described herein again.

In another example, if the apparatus 1400 corresponds to the information use apparatus in the foregoing method embodiments, the processor 1410 may be configured to control the communication interface 1430 to receive capability information, where the capability information indicates a message type set, and the message type set includes one or more message types supported by the apparatus 1400. The processor 1410 may be further configured to control the communication interface 1430 to send a second message to the first device, where a message type of the second message belongs to the message type set. The processor 1410 may be further configured to determine, based on the capability information, that the first device is capable of supporting a message of a first type, where the first type is a message type used in a first application scenario, and the second message belongs to the first type; and is further configured to. For details, refer to the detailed descriptions in the method 300. Details are not described herein again.

The coupling in this embodiment of this application may be an indirect coupling or a communication connection between apparatuses, units, or modules in an electrical form, a mechanical form, or another form, and is used for information interaction between the apparatuses, the units, or the modules. The processor 1410 may cooperate with the memory 1420. The processor 1410 may execute program instructions stored in the memory 1420.

A specific connection medium between the processor 1410, the memory 1420, and the communication interface 1430 is not limited in embodiments of this application. In this embodiment of this application, in FIG. 14, the memory 1420, the processor 1410, and the communication interface 1430 are connected through a bus. The bus is indicated by using a bold line in FIG. 14. A connection manner between other components is merely an example for description, and is not limited thereto. The bus may be classified into an address bus, a data bus, a control bus, and the like. For ease of representation, only one bold line is used to represent the bus in FIG. 14, but this does not indicate that there is only one bus or only one type of bus.

It should be noted that the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The methods, steps, and logical block diagrams that are disclosed in embodiments of this application may be implemented or performed. The general-purpose processor may be a microprocessor, or the processor may be any conventional processor or the like. The steps of the methods disclosed with reference to embodiments of this application may be directly executed and completed by a hardware decoding processor, or may be executed and completed by using a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that memories in the system and the method described in this specification include but are not limited to the memories and memories of any other suitable types.

This application provides a vehicle. The vehicle may be configured to perform the method performed by the first device and/or the method performed by the second device in the embodiment shown in FIG. 3.

This application provides a road side device. The road side device may be configured to perform the method performed by the first device and/or the method performed by the second device in the embodiment shown in FIG. 3.

This application provides a terminal device. The terminal device may be configured to perform the method performed by the first device and/or the method performed by the second device in the embodiment shown in FIG. 3.

This application provides a communication system, including the first device and the second device. The first device may be a vehicle, a road side device, or a terminal device, and the second device may also be a vehicle, a road side device, or a terminal device.

This application further provides a computer-readable storage medium. The computer-readable storage medium stores a computer program. When the computer program is executed by a processor, the method performed by the first device or the method performed by the second device in the embodiment shown in FIG. 3 is implemented.

This application further provides a computer program product, including a computer program. When the computer program is run, the method performed by the first device or the method performed by the second device in the embodiment shown in FIG. 3 is implemented.

Terms such as "unit" and "module" used in this specification may indicate computer-related entities, hardware, firmware, combinations of hardware and software, software, or software being executed.

A person of ordinary skill in the art may be aware that, illustrative logical blocks (illustrative logical blocks) and steps (steps) described in combination with embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In several embodiments provided in this application, it should be understood that the disclosed apparatuses, devices, and methods may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

In the foregoing embodiments, all or some of the functions of the functional units may be implemented by using software, hardware, firmware, or any combination thereof. When software is used to implement the embodiments, all or some of the embodiments may be implemented in a form of a computer program product. The computer program product includes one or more computer instructions (programs). When the computer program instructions (programs) are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, like a server or a data center that integrates one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information indication method, applied to a first device, wherein the method comprises:
generating a first message, wherein the first message comprises capability information, the capability information indicates a message type set, and the message type set comprises one or more message types supported by the first device; and
sending the first message.

2. The method according to claim 1, wherein that the capability information indicates a message type set comprises:
the capability information comprises information indicating the one or more message types.

3. The method according to claim 1 or 2, wherein the one or more message types are message types used in one or more application scenarios, and that the capability information indicates a message type set comprises:
the capability information comprises information indicating the one or more application scenarios.

4. The method according to any one of claims 1 to 3, wherein the first message further comprises identifier information and/or a physical address of the first device.

5. The method according to claim 4, wherein the identifier information comprises an identifier of a device type of the first device and a device identifier of the first device, and the device identifier uniquely identifies the first device in one or more devices corresponding to the device type.

6. The method according to any one of claims 1 to 5, wherein the first message further comprises location information, and the location information indicates a location of the first device.

7. The method according to any one of claims 1 to 6, wherein the first message is a network-layer message.

8. The method according to claim 7, wherein the first message is a dedicated service advertisement DSA, and the capability information is carried in a DSA header extension field or a DSA application extension field of the first message.

9. The method according to any one of claims 1 to 6, wherein the first message is an application-layer message.

10. The method according to claim 9, wherein the first message is a basic safety message BSM, a road side message RSM, or a personal unit message PSM, and the capability information is carried in a field indicating the message type supported by the first device and/or a field indicating an application scenario supported by the first device in the first message.

11. The method according to any one of claims 1 to 10, wherein the sending the first message comprises: sending the first message in a broadcast manner.

12. The method according to any one of claims 1 to 11, wherein the first message is a periodically sent message, or the first message is sent in response to triggering of a preset event.

13. An information use method, applied to a second device, wherein the method comprises:
receiving a first message from a first device, wherein the first message comprises capability information, the capability information indicates a message type set, and the message type set comprises one or more message types supported by the first device; and
sending a second message to the first device based on the capability information, wherein a message type of the second message belongs to the message type set.

14. The method according to claim 13, wherein that the capability information indicates a message type set comprises:
the capability information comprises information indicating the one or more message types.

15. The method according to claim 13 or 14, wherein the one or more message types are message types used in one or more application scenarios, and that the capability information indicates a message type set comprises:
the capability information comprises information indicating the one or more application scenarios.

16. The method according to any one of claims 13 to 15, wherein the first message further comprises identifier information and/or a physical address of the first device.

17. The method according to claim 16, wherein the identifier information comprises an identifier of a device type of the first device and a device identifier of the first device, and the device identifier uniquely identifies the first device in one or more devices corresponding to the device type.

18. The method according to any one of claims 13 to 17, wherein the first message further comprises location information, and the location information indicates a location of the first device.

19. The method according to any one of claims 13 to 18, wherein the sending a first message to the first device based on the capability information comprises:
determining, based on the capability information, that the first device is capable of supporting a message of a first type, wherein the first type is a message type used in a first application scenario; and
sending the second message to the first device in the first application scenario, wherein the message type of the second message is the first type.

20. The method according to claim 19, wherein the first application scenario comprises sensor data sharing, the message type of the second message comprises a sensor sharing message SSM type, and the second message is used to request the sensor data sharing.

21. The method according to claim 19, wherein the first application scenario comprises a cooperative lane change, the message type of the second message comprises a vehicle intention and request VIR type, and the second message is used to request the cooperative lane change.

22. The method according to claim 19, wherein the first application scenario comprises cooperative high priority vehicle passing, the second device is a high-priority vehicle, the message type of the second message comprises a VIR type and a road side coordination RSC message type, and the second message is used to request to preferentially pass a traveling route that is planned for the second device in advance.

23. The method according to any one of claims 13 to 22, wherein the first message is a network-layer message.

24. The method according to claim 23, wherein the first message is a dedicated service advertisement DSA, and the capability information is carried in a DSA header extension field or a DSA application extension field.

25. The method according to any one of claims 13 to 22, wherein the first message is an application-layer message.

26. The method according to claim 25, wherein the first message is a basic safety message BSM, a road side message RSM, or a personal unit message PSM, and the capability information is carried in a field indicating the message type supported by the first device and/or a field indicating an application scenario supported by the first device in the first message.

27. The method according to any one of claims 13 to 26, wherein the method further comprises:
storing the capability information in a cooperation capability table.

28. The method according to claim 27, wherein the method further comprises:
updating the cooperation capability table when at least one of the following conditions is met:
duration from time at which the first message is most recently received reaches a first preset threshold;
the capability information in the first message is inconsistent with capability information locally stored in the second device; or
a distance between the first device and the second device is greater than a second preset threshold.

29. An information indication apparatus, comprising a processor and a memory, wherein the memory is configured to store a computer program, and the processor is configured to execute the computer program, so that the apparatus implements the method according to any one of claims 1 to 12.

30. An information indication apparatus, comprising:
a processing module, configured to generate a first message, wherein the first message comprises capability information, the capability information indicates a message type set, and the message type set comprises one or more message types supported by the apparatus; and
a sending module, configured to send the first message.

31. The apparatus according to claim 30, wherein that the capability information indicates a message type set comprises:
the capability information comprises information indicating the one or more message types.

32. The apparatus according to claim 30 or 31, wherein the one or more message types are message types used in one or more application scenarios, and that the capability information indicates a message type set comprises:
the capability information comprises information indicating the one or more application scenarios.

33. The apparatus according to any one of claims 30 to 32, wherein the first message further comprises identifier information and/or a physical address of the apparatus.

34. The apparatus according to claim 33, wherein the identifier information comprises an identifier of a device type of the apparatus and a device identifier of the apparatus, and the device identifier uniquely identifies the apparatus in one or more devices corresponding to the device type.

35. The apparatus according to any one of claims 30 to 34, wherein the first message further comprises location information, and the location information indicates a location of the apparatus.

36. The apparatus according to any one of claims 30 to 35, wherein the first message is a network-layer message.

37. The apparatus according to claim 36, wherein the first message is a dedicated service advertisement DSA, and the capability information is carried in a DSA header extension field or a DSA application extension field of the first message.

38. The apparatus according to any one of claims 30 to 35, wherein the first message is an application-layer message.

39. The apparatus according to claim 38, wherein the first message is a basic safety message BSM, a road side message RSM, or a personal unit message PSM, and the capability information is carried in a field indicating the message type supported by the apparatus and/or a field indicating an application scenario supported by the apparatus in the first message.

40. The apparatus according to any one of claims 30 to 39, wherein the sending module is specifically configured to send the first message in a broadcast manner.

41. The apparatus according to any one of claims 30 to 40, wherein the first message is a periodically sent message, or the first message is sent in response to triggering of a preset event.

42. An information use apparatus, comprising a processor and a memory, wherein the memory is configured to store a computer program, and the processor is configured to execute the computer program, so that the apparatus implements the method according to any one of claims 13 to 28.

43. An information use apparatus, comprising:
a receiving module, configured to receive a first message from a first device, wherein the first message comprises capability information, the capability information indicates a message type set, and the message type set comprises one or more message types supported by the first device; and
a sending module, configured to send a second message to the first device based on the capability information, wherein a message type of the second message belongs to the message type set.

44. The apparatus according to claim 43, wherein that the capability information indicates a message type set comprises:
the capability information comprises information indicating the one or more message types.

45. The apparatus according to claim 43 or 44, wherein the message type in the message type set is a message type used in one or more application scenarios, and that the capability information indicates a message type set comprises:
the capability information comprises information indicating the one or more application scenarios.

46. The apparatus according to any one of claims 43 to 45, wherein the first message further comprises identifier information and/or a physical address of the first device.

47. The apparatus according to claim 46, wherein the identifier information comprises an identifier of a device type of the first device and a device identifier of the first device, and the device identifier uniquely identifies the first device in one or more devices corresponding to the device type.

48. The apparatus according to any one of claims 43 to 47, wherein the first message further comprises location information, and the location information indicates a location of the first device.

49. The apparatus according to any one of claims 43 to 48, wherein the apparatus further comprises a processing module, configured to determine, based on the capability information, that the first device is capable of supporting a message of a first type, wherein the first type is a message type used in a first application scenario; and
the sending module is specifically configured to send the second message to the first device in the first application scenario, wherein the message type of the second message is the first type.

50. The apparatus according to claim 49, wherein the first application scenario comprises sensor data sharing, the message type of the second message comprises a sensor sharing message SSM type, and the second message is used to request the sensor data sharing.

51. The apparatus according to claim 49, wherein the first application scenario comprises a cooperative lane change, the message type of the second message comprises a vehicle intention and request VIR type, and the second message is used to request the cooperative lane change.

52. The apparatus according to claim 49, wherein the first application scenario comprises cooperative high priority vehicle passing, the apparatus is a high-priority vehicle, the message type of the second message comprises a VIR type and a road side coordination RSC message type, and the second message is used to request to preferentially pass a traveling route that is planned for the apparatus in advance.

53. The apparatus according to any one of claims 43 to 52, wherein the first message is a network-layer message.

54. The apparatus according to claim 53, wherein the first message is a dedicated service advertisement DSA, and the capability information is carried in a DSA header extension field or a DSA application extension field.

55. The apparatus according to any one of claims 43 to 52, wherein the first message is an application-layer message.

56. The apparatus according to claim 55, wherein the first message is a basic safety message BSM, a road side message RSM, or a personal unit message PSM, and the capability information is carried in a field indicating the message type supported by the first device and/or a field indicating an application scenario supported by the first device in the first message.

57. The apparatus according to any one of claims 53 to 56, wherein the apparatus further comprises a storage module, configured to store the capability information in a cooperation capability table.

58. The apparatus according to claim 57, wherein the storage module is further configured to update the cooperation capability table when at least one of the following conditions is met:
duration from time at which the first message is most recently received reaches a first preset threshold;
the capability information in the first message is inconsistent with capability information locally stored in the apparatus; or
a distance between the first device and the apparatus is greater than a second preset threshold.

59. A vehicle, configured to implement the method according to any one of claims 1 to 28.

60. A communication system, comprising:
an information indication apparatus, configured to implement the method according to any one of claims 1 to 12; and
an information use apparatus, configured to implement the method according to any one of claims 13 to 28.

61. A computer-readable storage medium, wherein the computer-readable storage medium stores a computer program, and when the computer program is executed by a processor, the method according to any one of claims 1 to 28 is implemented.

62. A computer program product, comprising a computer program, wherein when the computer program is run, the method according to any one of claims 1 to 28 is implemented.
